# EUROPEAN PATENT APPLICATION

(11) **EP 4 757 474 A1**
(43) Date of publication of application: **10.06.2026**
(21) Application number: 23948093.2
(22) Date of filing: 10.08.2023
(51) Int. Cl.: H04W 72/25

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LENG, Bingxue, Dongguan, Guangdong 523860 (CN); LU, Qianxi, Dongguan, Guangdong 523860 (CN)
(74) Representative: RGTH
(86) International application number: PCT/CN2023/112345
(87) International publication number: WO 2025/030523

(57) **Abstract**

Provided are a wireless communication method and a communication device. The wireless communication method comprises: a first terminal device receives a first identifier configured by a first device, the first identifier being used for transmitting data on a first link, wherein the first link is a sidelink, and the first link passes through a plurality of relay terminal devices.

## Description

### TECHNICAL FIELD

This application relates to the field of communications technologies, and more specifically, to a wireless communication method and a communications device.

### BACKGROUND

Since two terminal devices may be unable to directly communicate with each other, a terminal device to terminal device (or referred to as UE to UE, U2U) relay technology is introduced into some sidelink communications systems, that is, two end terminal devices may be connected by using a relay terminal device, to transmit data by using the relay terminal device.

U2U relay scenarios include a multi-hop U2U relay scenario, in which data may be transmitted between two end terminal devices by using a plurality of relay terminal devices. In the multi-hop U2U relay scenario, how to identify a data flow of a U2U relay link is a problem to be solved.

### SUMMARY

This application provides a wireless communication method and a communications device. The following describes the aspects related to this application.

According to a first aspect, a wireless communication method is provided, including: receiving, by a first terminal device, a first identifier configured by a first device, where the first identifier is used to transmit data on a first link, the first link is a sidelink, and the first link passes through a plurality of relay terminal devices.

According to a second aspect, a wireless communication method is provided, including: transmitting, by a first device, a first identifier configured by the first device to a first terminal device, where the first identifier is used to transmit data on a first link, the first link is a sidelink, and the first link passes through a plurality of relay terminal devices.

According to a third aspect, a terminal device is provided. The terminal device is a first terminal device, and the terminal device includes a receiving module, configured to receive a first identifier configured by a first device, where the first identifier is used to transmit data on a first link, the first link is a sidelink, and the first link passes through a plurality of relay terminal devices.

According to a fourth aspect, a communications device is provided. The communications device is a first device, and the communications device includes a transmitting module, configured to transmit a first identifier configured by the first device to a first terminal device, where the first identifier is used to transmit data on a first link, the first link is a sidelink, and the first link passes through a plurality of relay terminal devices.

According to a fifth aspect, a terminal device is provided, including a processor, a memory, and a communications interface. The memory is configured to store one or more computer programs, and the processor is configured to invoke the computer program in the memory, to cause the terminal device to execute some or all of the steps in the method according to the first aspect.

According to a sixth aspect, a communications device is provided, including a processor, a memory, and a communications interface. The memory is configured to store one or more computer programs, and the processor is configured to invoke the computer program in the memory, to cause the communications device to execute some or all of the steps in the method according to the second aspect.

According to a seventh aspect, an embodiment of this application provides a communications system, where the system includes the foregoing terminal device and/or the foregoing communications device. In another possible design, the system may further include another device that interacts with the terminal device or the communications device in the solutions provided in embodiments of this application.

According to an eighth aspect, an embodiment of this application provides a computer-readable storage medium, where the computer-readable storage medium stores a computer program, and the computer program causes a computer to execute some or all of steps in the method according to the foregoing aspects.

According to a ninth aspect, an embodiment of this application provides a computer program product, where the computer program product includes a non-transitory computer-readable storage medium that stores a computer program, and the computer program is operable to cause a computer to execute some or all of steps in the method according to the foregoing aspects. In some implementations, the computer program product may be a software installation package.

According to a tenth aspect, an embodiment of this application provides a chip, where the chip includes a memory and a processor, and the processor may invoke a computer program from the memory and run the computer program, to implement some or all of steps in the method according to the foregoing aspects.

In embodiments of this application, a first device can configure a first identifier, so that a node on a first link (a multi-hop U2U relay link) can transmit data on the first link according to the first identifier. That is, the first identifier configured by the first device can be used to identify a data flow of the U2U relay link, thereby ensuring normal data transmission.

### BRIEF DESCRIPTION OF DRAWINGS

FIG. 1 is an example diagram of a system architecture of a wireless communications system to which embodiments of this application may be applied.
FIG. 2 is an example diagram showing that a network device allocates a sidelink communication resource to a terminal device.
FIG. 3 is an example diagram showing that a terminal device autonomously selects a sidelink communication resource according to an embodiment of this application.
FIG. 4 is an example diagram showing that a terminal device autonomously selects a sidelink communication resource according to another embodiment of this application.
FIG. 5 is an example diagram of a U2U relay architecture.
FIG. 6 is a schematic flowchart of a possible implementation in which a source terminal device and a target terminal device establish an end-to-end PC5 connection.
FIG. 7 is an example diagram of a U2U relay architecture of a layer 2.
FIG. 8 is a schematic flowchart of a wireless communication method according to an embodiment of this application.
FIG. 9 is a schematic flowchart of a wireless communication method according to another embodiment of this application.
FIG. 10 is a schematic flowchart of a wireless communication method according to still another embodiment of this application.
FIG. 11 is an example diagram of configuring a first identifier according to an embodiment of this application.
FIG. 12 is an example diagram of configuring a first identifier according to another embodiment of this application.
FIG. 13 is an example diagram of configuring a first identifier according to still another embodiment of this application.
FIG. 14 is an example diagram of configuring a first identifier according to yet another embodiment of this application.
FIG. 15 is an example diagram of configuring a first identifier according to still yet another embodiment of this application.
FIG. 16 is an example diagram of configuring a first identifier according to a further embodiment of this application.
FIG. 17 is an example diagram of transmitting assistance information according to an embodiment of this application.
FIG. 18 is an example diagram of transmitting assistance information according to another embodiment of this application.
FIG. 19 is an example diagram of transmitting assistance information according to still another embodiment of this application.
FIG. 20 is an example diagram of configuring a first identifier according to a still further embodiment of this application.
FIG. 21 is an example diagram of configuring a first identifier according to a yet further embodiment of this application.
FIG. 22 is an example diagram of configuring a first identifier according to a still yet further embodiment of this application.
FIG. 23 is an example diagram of configuring a first identifier according to an even yet another embodiment of this application.
FIG. 24 is an example diagram of configuring a first identifier according to another embodiment of this application.
FIG. 25 is an example diagram of configuring a first identifier according to another embodiment of this application.
FIG. 26 is an example diagram of configuring a first identifier according to another embodiment of this application.
FIG. 27 is an example diagram of configuring a first identifier according to another embodiment of this application.
FIG. 28 is an example diagram of configuring a first identifier according to another embodiment of this application.
FIG. 29 is an example diagram of configuring a first identifier according to another embodiment of this application.
FIG. 30 is an example diagram of configuring a first identifier according to another embodiment of this application.
FIG. 31 is an example diagram of configuring a first identifier according to another embodiment of this application.
FIG. 32 is a schematic structural diagram of a terminal device according to an embodiment of this application.
FIG. 33 is a schematic structural diagram of a communications device according to an embodiment of this application.
FIG. 34 is a schematic structural diagram of a communications apparatus according to an embodiment of this application.

### DESCRIPTION OF EMBODIMENTS

### Communications system architecture

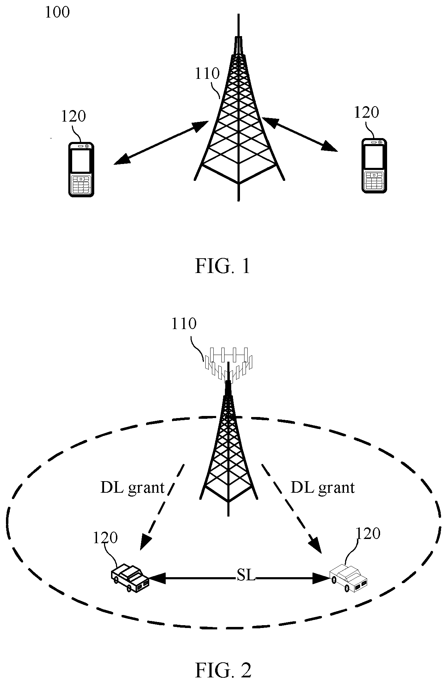

FIG. 1 is an example diagram of a system architecture of a wireless communications system 100 to which embodiments of this application may be applied. The wireless communications system 100 may include a network device 110 and a terminal device 120. The network device 110 may be a device that communicates with the terminal device 120. The network device 110 may provide communication coverage for a specific geographic area, and may communicate with a terminal device 120 within the coverage.

FIG. 1 exemplarily shows one network device and two terminal devices. Optionally, the wireless communications system 100 may include one or more network devices 110 and/or one or more terminal devices 120. For a network device 110, the one or more terminal devices 120 may be located within network coverage of the network device 110, or may be located outside the network coverage of the network device 110, or may be located partially within the network coverage of the network device 110, and may be located partially outside the network coverage of the network device 110, which is not limited in embodiments of this application.

Optionally, the wireless communications system 100 may further include another network entity, such as a network controller or a mobility management entity, which is not limited in embodiments of this application.

It should be understood that the technical solutions in embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, and LTE time division duplex (time division duplex, TDD). The technical solutions provided in this application may be further applied to a future communications system, such as a 6th generation mobile communications system or a satellite communications system.

A terminal device in embodiments of this application may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other by using a sidelink signal. A cellular phone and a smart household device communicate with each other, without relaying a communication signal by using a base station.

A network device in embodiments of this application may be a device for communicating with the terminal device. The network device may also be referred to as an access network device or a radio access network device. For example, the network device may be a base station. The network device in embodiments of this application may refer to a radio access network (radio access network, RAN) node (or device) that connects the terminal device to a wireless network. The base station may broadly cover devices of various names below, or may be replaced with devices of the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB MeNB, a secondary eNodeB SeNB, a multistandard radio (MSR) node, a home base station, a network controller, an access node, a wireless node, an access point (access point, AP), a transmission node, a transceiver node, a base band unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device to device D2D, vehicle-to-everything (vehicle-to-everything, V2X), or machine-to-machine (machine-to-machine, M2M) communications, a network-side device in a 6G network, a device that functions as a base station in a future communications system, or the like. The base station may support networks of a same access technology or different access technologies. A specific technology and a specific device form used by the network device are not limited in embodiments of this application.

The base station may be fixed or mobile. For example, a helicopter or an unmanned aerial vehicle may be configured to act as a mobile base station, and one or more cells may move based on a location of the mobile base station. In other examples, a helicopter or an unmanned aerial vehicle may be configured to serve as a device in communication with another base station.

In some deployments, the network device in embodiments of this application may refer to a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may alternatively be implemented by software functions running on hardware, or by virtualization functions instantiated on a platform (for example, a cloud platform).

### Mode of sidelink communication

Sidelink communication refers to a communications technology based on a sidelink (sidelink, SL). The sidelink communication may be, for example, D2D or V2X. In a conventional cellular system, communication data is received or transmitted between a terminal device and a network device, and sidelink communication supports direct transmission of communication data between terminal devices. Compared with conventional cellular communication, direct transmission of communication data between terminal devices may have higher spectrum efficiency and a lower transmission delay. For example, a sidelink communications technology is used in a vehicle-to-everything system.

Two modes (or referred to as transmission modes) of sidelink communication are defined in some standards or protocols (for example, 3rd generation partnership project (3rd generation partnership project, 3GPP)): a first mode (or referred to as a mode A, a mode 3, or the like) and a second mode (or referred to as a mode B, a mode 4, or the like).

In the first mode, a resource (the resource mentioned in this application may also be referred to as a transmission resource, for example, a time frequency resource) of a terminal device is allocated by a network device. The terminal device may transmit data on a sidelink based on the resource allocated by the network device. The network device may allocate a resource for a single time of transmission to the terminal device, or may allocate a resource for semi-static transmission to the terminal device. The first mode may be applied to a scenario with coverage of a network device, as shown in FIG. 2. In the scenario shown in FIG. 2, a terminal device 120 is located within network coverage of a network device 110. Therefore, the network device 110 may allocate, to the terminal device 120, a resource used in a sidelink transmission process.

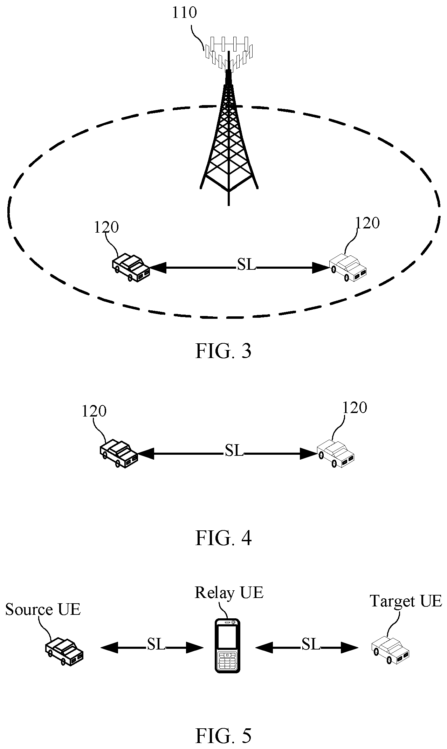

In the second mode, the terminal device may autonomously select one or more resources from a resource pool (resource pool, RP). Then, the terminal device may perform sidelink transmission based on the selected resource. For example, in the scenario shown in FIG. 3, a terminal device 120 is located within network coverage of a network device 110, and the terminal device 120 may also autonomously select one or more resources from a resource pool configured by the network device 110 to perform sidelink transmission. For another example, in the scenario shown in FIG. 4, a terminal device 120 is located outside network coverage of a network device 110. Therefore, the terminal device 120 may autonomously select one or more resources from a pre-configured resource pool to perform sidelink transmission.

### Different research stages of sidelink communication

In 3GPP, research on sidelink communication may be divided into different stages, on which research contents are different.

In Release 12 (release 12, Rel-12) or Rel-13, sidelink communication (for example, D2D) is mainly to study a scenario of proximity based services (proximity based service, ProSe), for example, mainly to study a service of a public security type in the proximity based services. In a ProSe service, a position of a resource pool in time domain may be configured, to implement a difference in transmitting or receiving sidelink communication data between terminal devices. For example, the resource pool may be configured to be discontinuous in time domain, so that the terminal devices can discontinuously transmit or receive sidelink communication data on a sidelink, thereby achieving a power saving effect.

In Rel-14 or Rel-15, sidelink communication is mainly to study a scenario of V2X, or in other words, mainly to study a scenario of vehicle-to-vehicle communication, for example, mainly to study services of vehicle-to-vehicle communication and vehicle-to-pedestrian communication with relatively high moving speeds. Because a vehicle-mounted system in V2X has continuous power supply, power efficiency is not a major problem in a V2X scenario, and how to reduce a data transmission delay is the major problem in the V2X scenario. In an implementation of V2X, a terminal device may continuously transmit or receive sidelink communication data, to reduce a data transmission delay.

In Rel-14, side communication further studies a scenario of further enhancements to device to device (further enhancements to device to device, FeD2D), for example, mainly studies a scenario in which a wearable device accesses a network device by using a mobile phone. It should be understood that FeD2D is mainly targeted at a scenario with a low moving speed and low power access. On a pre-research stage of an FeD2D research process, 3GPP determines that a network device may configure a DRX (discontinuous reception, discontinuous reception) parameter of a remote (remote) terminal by using a relay (relay) terminal. However, because this topic does not further enter a standardization stage, specific details of how to perform DRX configuration are not conclusive.

Further enhancements are introduced in NR on the basis of sidelink communication research of LTE. For example, NR V2X extends an application scenario of LTE V2X, and NR V2X is no longer limited to being applied to only a broadcast scenario. An application scenario of V2X is further extended to unicast and multicast, to study application of V2X in different application scenarios.

NR V2X may also define the foregoing two modes of sidelink communication. Further, a terminal device may be in a mixed mode, that is, the terminal device may use either the first mode or the second mode to acquire a resource.

NR V2X may be applied to a scenario in which there is no feedback and a terminal device autonomously initiates hybrid automatic repeat request (hybrid automatic repeat request, HARQ) retransmission, and may also be applied to a scenario of feedback-based HARQ retransmission, for example, feedback-based HARQ retransmission in a unicast communication scenario or feedback-based HARQ retransmission in a multicast communication scenario.

Same as LTE V2X, a vehicle-mounted system in NR V2X has continuous power supply. Therefore, power efficiency is not a major problem in a V2X scenario, and how to reduce a data transmission delay is the major problem in the V2X scenario. In an implementation of V2X, a terminal device may continuously transmit or receive sidelink communication data, to reduce a data transmission delay.

### Sidelink U2U relay technology

Since two terminal devices may be unable to directly communicate with each other, U2U relay technologies (or referred to as U2U relay functions) are introduced into some sidelink communications systems. For example, in Rel-17 ProSe, 3GPP studies U2U relay technologies based on layer 2 relays or layer 3 relays. FIG. 5 is an example diagram of a U2U relay architecture. As shown in FIG. 5, a source terminal device is connected to a target terminal device by using a relay terminal device, and the relay terminal device may transfer data between the source terminal device and the target terminal device. In some embodiments, the source terminal device and the target terminal device in the U2U relay architecture may also be referred to as end terminal devices (or remote terminal devices). That is, in a U2U relay scenario, two end terminal devices may be connected by using a relay terminal device, to transmit data by using the relay terminal device.

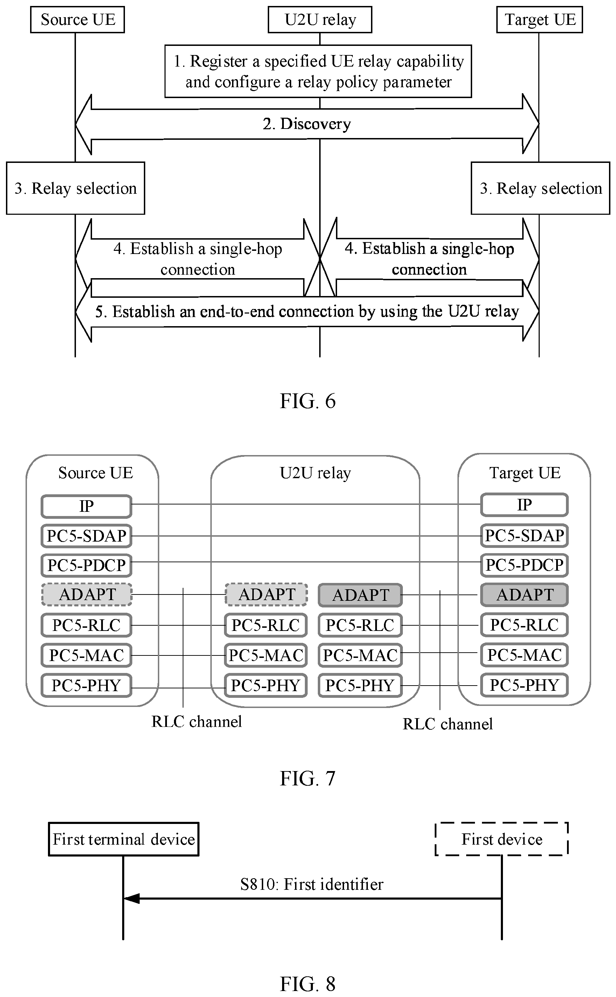

In a possible implementation, the source terminal device and the target terminal device (that is, the two end terminal devices) may separately establish a connection to the relay terminal device, to establish an end-to-end PC5 connection by using the relay terminal device. With reference to FIG. 6, the following describes a possible implementation in which the source terminal device and the target terminal device establish the end-to-end PC5 connection.

As shown in FIG. 6, a method for establishing the end-to-end PC5 connection between the source terminal device and the target terminal device may include step 1 to step 5.

In step 1, the relay terminal device registers a specified terminal device relay capability and configures a relay policy parameter.

In step 2, the source terminal device, the relay terminal device, and the target terminal device discover each other.

In a possible implementation, the source terminal device, the relay terminal device, and the target terminal device may discover each other by using a discovery (discovery) message or a direct communication request (direct communication request, DCR) message.

In some embodiments, the relay terminal device may assist the source terminal device in forwarding the discovery message or the DCR message.

In step 3, the source terminal device and the target terminal device perform relay selection.

In some embodiments, the source terminal device and the target terminal device may perform relay selection after discovering each other, to select a proper relay and separately establish a connection to the relay.

In step 4, the source terminal device and the target terminal device separately establish a connection to the relay terminal device.

In some embodiments, the connection established between the source terminal device and the relay terminal device, and the connection established between the target terminal device and the relay terminal device are single-hop connections. That is, the source terminal device and the target terminal device may separately establish a single-hop connection to the relay terminal device.

In step 5, the source terminal device and the target terminal device establish an end-to-end connection by using the relay terminal device.

As mentioned above, 3GPP studies U2U relay technologies based on layer 2 relays or layer 3 relays. The following describes U2U relay technologies based on a layer 2.

FIG. 7 shows a U2U relay architecture of a layer 2. As shown in FIG. 7, an adaptation layer (adaptation layer, ADAPT) is placed onto a control plane or user plane radio link control (radio link control, RLC) sublayer between a relay terminal device and a source terminal device or a target terminal device. A PC5-service data adaptation protocol (PC5-service data adaptation protocol, PC5-SDAP) or PC5-packet data convergence protocol (PC5-packet data convergence protocol, PC5-PDCP) layer and a radio resource control (radio resource control, RRC) layer terminate between the source terminal device and the target terminal device, while an RLC layer, a medium access control (medium access control, MAC) layer, and a physical layer (physical layer, PHY) terminate on each link (that is, links between the source terminal device and the relay terminal device and links between the relay terminal device and the target terminal device).

In some embodiments, the adaptation layer may also be referred to as a sidelink relay adaptation protocol (sidelink relay adaptation protocol, SRAP) layer.

For U2U relays of the layer 2, in some embodiments, the adaptation layer of the relay terminal device supports sidelink bearer mapping between access PC5-RLC channels.

For a sidelink relay service, different end-to-end bearers of a same end terminal device and/or different end terminal devices may perform N:1 mapping and data multiplexing on one PC5-RLC channel. In some embodiments, the end-to-end bearers may include a signalling radio bearer (signalling radio bearer, SRB) and/or a data radio bearer (data radio bearer, DRB).

In some embodiments, the adaptation layer may support terminal identities of a sidelink service (data from a plurality of terminal devices is multiplexed), or in other words, the adaptation layer may allocate the terminal identities of the sidelink service. A PC5 radio bearer and a terminal identity of a terminal device may be included in the adaptation layer, so that the target terminal device associates received data packets of a specific PDCP entity associated with a radio bearer of the source terminal device.

Sidelink U2U relay scenarios may include a single-hop U2U relay scenario and a multi-hop U2U relay scenario. In the single-hop U2U relay scenario, two end terminal devices may be connected by using one relay terminal device, or in other words, data may be transmitted between two end terminal devices by using one relay terminal device. In the multi-hop U2U relay scenario, two end terminal devices may be connected by using a plurality of (two or more) relay terminal devices, or in other words, data may be transmitted between two end terminal devices by using a plurality of relay terminal devices.

In a possible implementation, in the single-hop U2U relay scenario, the adaptation layer may identify a data flow by using ID information and bearer ID information. For example, the relay terminal device may allocate a terminal device identity (UE ID) to an end terminal device, to identify a data flow by using the UE ID.

However, in the multi-hop U2U relay scenario, a plurality of relay terminal devices exist. Therefore, a topology structure between communications devices is more complicated, an identity conflict is more likely to occur, resulting in failing to identify a data flow. In this case, in the multi-hop U2U relay scenario, how to identify a data flow of a U2U relay link is a problem to be solved.

In addition, because there are more nodes in the multi-hop U2U relay scenario, a node that configures the identities also needs to be further discussed.

To solve the foregoing problem, embodiments of this application provide a wireless communication method and a communications device. A first device configures a first identifier, to ensure that a node on a first link can normally transmit data on the first link. The following describes method embodiments of this application with reference to the accompanying drawings.

FIG. 8 is a schematic flowchart of a wireless communication method according to an embodiment of this application. The method shown in FIG. 8 may include step S810. The following describes this step.

In step S810, a first terminal device receives a first identifier configured by a first device.

In some embodiments, the first identifier may be directly transmitted by the first device to the first terminal device. In other words, after configuring the first identifier, the first device may directly transmit the first identifier to the first terminal device.

In some embodiments, the first identifier may be transmitted by the first device to the first terminal device by using another terminal device (for example, another terminal device on a first link). In other words, after configuring the first identifier, the first device may forward the first identifier to the first terminal device by using another terminal device. In an example, the first identifier may be transmitted by the first device to the first terminal device through a second terminal device, where the second terminal device is connected with the first terminal device via a single-hop link.

In embodiments of this application, the first identifier may be used to transmit data on the first link, where the first link is a sidelink, and the first link passes through a plurality of relay terminal devices. That is, the first identifier may be used to transmit data on a multi-hop U2U relay link. In other words, the first identifier may be used to identify a data flow on a multi-hop U2U relay link.

In embodiments of this application, the first identifier may be associated with the first link. For example, the first identifier may be used to identify some or all of single-hop links on the first link. Alternatively, the first identifier may be used to identify nodes on the first link or the like.

In some embodiments, the first identifier mentioned in embodiments of this application may be one identifier. The one identifier may independently identify one link (for example, the first link), to transmit data on the link. Alternatively, the one identifier may jointly identify one link with another identifier (for example, a second identifier), to transmit data on the link. Alternatively, the one identifier may jointly identify nodes on one link with another identifier, to identify the link by using these nodes, thereby transmitting data on the link.

An implementation of how to transmit data on the first link by using the first identifier is not limited in embodiments of this application. In a possible implementation, the first identifier may be used to identify a link, for example, identify the first link or a part of the first link. In this case, the first link may be identified according to the first identifier, to complete data transmission on the first link. In another possible implementation, the first identifier may be used to identify the nodes on the first link. In this case, the nodes on the first link may be identified according to the first identifier, so that the first link may be identified, to complete data transmission on the first link.

In some embodiments, the first identifier may be used to identify one of the following: the first link; one single-hop link on the first link; a plurality of single-hop links on the first link, or one terminal device on the first link. The following provides exemplary descriptions.

### Case 1: The first identifier is used to identify the first link.

In this case, it may be understood that the first identifier may be used to identify one complete link. In other words, the first link may be identified by using one identifier.

In some embodiments, if the first identifier is used to identify the first link, it may be considered that identifiers corresponding to the single-hop links on the first link are the same, that is, the single-hop links on the first link are all identified by using the first identifier.

In some embodiments, in a case that the first identifier is used to identify the first link, the first identifier may be carried in an SRAP data packet as an identifier for identifying the first link. In this way, after receiving the SRAP data packet, a terminal device on the first link may know a link (for example, the first link) to which the data packet belongs, thereby knowing how to process the data packet.

In the case 1, the first identifier may be configured by one device, that is, the first device. For descriptions of the first device and how the first device configures the first identifier, reference may be made to related descriptions in the following. For brevity, details are not described herein.

In some embodiments, after configuring the first identifier, the first device may transmit the first identifier to terminal devices (nodes) on the first link, where first identifiers transmitted by the first device to the terminal devices are the same.

In an implementation, the first device may directly transmit the first identifier to the terminal devices on the first link.

In another implementation, the first device may transmit the first identifier to terminal devices directly connected to the first device or served by the first device on the first link, and then the terminal device that has received the first identifier sequentially transmit the first identifier to subsequent terminal devices directly connected to the terminal devices that has received the first identifier.

### Case 2: The first identifier is used to identify one single-hop link on the first link.

That is, the first link may be identified by using a plurality of identifiers (the first identifier and another identifier). In this case, it may be considered that the identifiers corresponding to the single-hop links on the first link are different, that is, the single-hop links on the first link are identified by using different identifiers.

In embodiments of this application, the one single-hop link identified by the first identifier is not limited. The first identifier may be used to identify any single-hop link (for example, a first single-hop link) on the first link. Another single-hop link may be identified by using another identifier, and the identifiers corresponding to different single-hop links are different.

For example, the first identifier is used to identify the first single-hop link on the first link. In this case, the first identifier may be carried in an SRAP data packet as an identifier for identifying the first single-hop link. In this way, after receiving the SRAP data packet, a terminal device on the first link may know a hop from which the data packet comes and a hop to which the data packet is to be transmitted, and/or how to process the data packet.

In some embodiments, the identifiers of the single-hop links corresponding to the first link may be configured by a same device (for example, the first device).

In some embodiments, identifiers of some or all of the single-hop links corresponding to the first link may be configured by different devices. For example, the identifiers of the single-hop links corresponding to the first link are all configured by different devices. Alternatively, identifiers of two adjacent single-hop links corresponding to the first link may be configured by different devices.

In some embodiments, an identifier corresponding to one single-hop link on the first link may be configured by one terminal device associated with the single-hop link. In other words, one single-hop link on the first link is associated with two terminal devices, and an identifier corresponding to the single-hop link may be configured by one terminal device in the two terminal devices. For example, the first identifier is used to identify the first single-hop link, and the first single-hop link is associated with the first terminal device and the second terminal device. In this case, the first identifier may be configured by the second terminal device (the first terminal device is a terminal device that receives the first identifier).

In some embodiments, one terminal device on the first link may configure only an identifier corresponding to one single-hop link.

In some embodiments, one terminal device on the first link may configure identifiers corresponding to a plurality of single-hop links, for example, configure identifiers corresponding to two single-hop links associated with the terminal device.

In some embodiments, an identifier corresponding to one single-hop link on the first link may be configured by an end terminal device.

In some embodiments, an identifier corresponding to one single-hop link on the first link may be configured by a relay terminal device.

In some embodiments, both an end terminal device and a relay terminal device on the first link participate in configuration of an identifier on the first link.

For example, the first link includes N single-hop links, each single-hop link in the N single-hop links may correspond to one identifier, and the identifier corresponding to each single-hop link may be configured by one terminal device associated with the single-hop link, where N is a positive integer greater than or equal to 2.

In an example, the identifier corresponding to each single-hop link in the N single-hop links may be configured by a terminal device at a starting end of the single-hop link. For example, two terminal devices associated with the first single-hop link are a source terminal device (a terminal device at a starting end) and a relay terminal device 1 (a terminal device at a terminating end). In this case, an identifier of the first single-hop link may be configured by the source terminal device. For example, two terminal devices associated with the first single-hop link are a relay terminal device 1 (a terminal device at a starting end) and a relay terminal device 2 (a terminal device at a terminating end). In this case, an identifier of the first single-hop link may be configured by the relay terminal device 1.

In another example, the identifier corresponding to each single-hop link in the N single-hop links may be configured by a terminal device at a terminating end of the single-hop link. For example, two terminal devices associated with the first single-hop link are a source terminal device (a terminal device at a starting end) and a relay terminal device 1 (a terminal device at a terminating end). In this case, an identifier of the first single-hop link may be configured by the relay terminal device 1. For example, two terminal devices associated with the first single-hop link are a relay terminal device 1 (a terminal device at a starting end) and a relay terminal device 2 (a terminal device at a terminating end). In this case, an identifier of the first single-hop link may be configured by the relay terminal device 2.

In some embodiments, one terminal device on the first link may configure only an identifier of one single-hop link.

In some embodiments, a relay terminal device on the first link participates in configuration of an identifier on the first link. For example, a relay device on the first link participates in configuration of an identifier on the first link, and an end terminal device does not participate in configuration of an identifier on the first link.

In some embodiments, one relay terminal device on the first link may configure identifiers of two or more single-hop links.

For example, the first link includes M relay terminal devices, each relay terminal device in the M relay terminal devices is associated with two single-hop links on the first link, and each relay terminal device may configure identifiers for the two single-hop links associated with the relay terminal device, where M is a positive integer greater than or equal to 2.

In some embodiments, if a relay terminal device configures identifiers for two single-hop links associated with the relay terminal device, two identifiers may be configured for one single-hop link (for example, two relay terminal devices associated with the single-hop link both configure identifiers for the single-hop link), resulting in an identifier conflict.

To solve the foregoing problem, embodiments of this application provide several solutions. The following exemplarily describes these solutions by using an example in which a first single-hop link is located between a first relay terminal device and a second relay terminal device on a first link, and two identifiers may be configured for the first single-hop link.

Solution 1: Assuming that two identifiers are configured for the first single-hop link, the two identifiers may be associated with different transmission directions.

It is assumed that the first relay terminal device configures a second identifier for the first single-hop link, and the second relay terminal device configures a third identifier for the first single-hop link. In this case, the second identifier may be associated with a first transmission direction of the first single-hop link, and the third identifier may be associated with a second transmission direction of the first single-hop link.

Solution 2: Assuming that two identifiers are configured for the first single-hop link, different relay terminal devices may perform data transmission by using different identifiers.

It is assumed that the first relay terminal device configures a second identifier for the first single-hop link, and the second relay terminal device configures a third identifier for the first single-hop link. In this case, the first relay terminal device may identify the first single-hop link or perform data transmission based on the second identifier and a mapping relationship between the second identifier and the third identifier. In other words, for the first terminal device, data transmission may be performed on the first single-hop link based on the second identifier and the mapping relationship between the second identifier and the third identifier. The second relay terminal device may identify the first single-hop link or perform data transmission based on the third identifier and the mapping relationship between the second identifier and the third identifier. In other words, for the second terminal device, data transmission may be performed on the first single-hop link based on the third identifier and the mapping relationship between the second identifier and the third identifier.

Solution 3: Assuming that both the first relay terminal device and the second relay terminal device can configure an identifier for the first single-hop link, it may be determined that one relay terminal device in the first relay terminal device and the second relay terminal device configures an identifier for the first single-hop link.

In other words, it is assumed that both the first relay terminal device and the second relay terminal device can configure an identifier for the first single-hop link. In this case, it may be determined that the first relay terminal device configures an identifier for the first single-hop link, and the second relay terminal device does not configure an identifier for the first single-hop link.

In some embodiments, a relay terminal device that configures an identifier for the first single-hop link may be determined based on one or more of the following: a time at which the identifier of the first single-hop link is transmitted, a time at which assistance information is transmitted, a terminal device capability of the relay terminal device, information coordinated by the relay terminal device, or information related to establishment of a connection to the first single-hop link.

For example, the relay terminal device that configures the identifier for the first single-hop link may be determined based on the time at which the identifier of the first single-hop link is transmitted. In this case, the relay terminal device that configures the identifier for the first single-hop link may be a relay terminal device that transmits the identifier of the first single-hop link at an earlier time, or may be a relay terminal device that transmits the identifier of the first single-hop link at a later time.

For example, the relay terminal device that configures the identifier for the first single-hop link may be determined based on the time at which the assistance information is transmitted. In this case, the relay terminal device that configures the identifier for the first single-hop link may be a relay terminal device that transmits the assistance information at an earlier time, or may be a relay terminal device that transmits the assistance information at a later time.

For example, the relay terminal device that configures the identifier for the first single-hop link may be determined based on the terminal device capability of the relay terminal device. In this case, the relay terminal device that configures the identifier for the first single-hop link may be a relay terminal device with a relatively strong terminal device capability, or may be a relay terminal device with a relatively weak terminal device capability.

For example, the relay terminal device that configures the identifier for the first single-hop link may be determined based on the information related to the establishment of the connection to the first single-hop link. In this case, the relay terminal device that configures the identifier for the first single-hop link may be a relay terminal device that initiates a connection establishment request of the first single-hop link, or may be a relay terminal device that receives a connection establishment request of the first single-hop link.

In some embodiments, the assistance information may be used to determine an identifier corresponding to the first single-hop link.

For example, the first relay terminal device configures an identifier for the first single-hop link. In this case, the first relay terminal device may meet one or more of the following conditions: a time at which the first relay terminal device transmits an identifier of the first single-hop link is earlier than a time at which the second relay terminal device transmits an identifier of the first single-hop link; a time at which the first relay terminal device transmits assistance information is earlier than a time at which the second relay terminal device transmits assistance information; a terminal device capability of the first relay terminal device is higher than a terminal device capability of the second relay terminal device; the first relay terminal device negotiates with the second relay terminal device to determine that the first relay terminal device configures an identifier of the first single-hop link; or a connection establishment request used to establish the first single-hop link is initiated by the first relay terminal device.

Solution 4: Assuming that two identifiers are configured for the first single-hop link, the relay terminal device may perform data transmission based on a target identifier in the two identifiers.

It is assumed that the first relay terminal device configures a second identifier for the first single-hop link, and the second relay terminal device configures a third identifier for the first single-hop link. In this case, data transmission may be performed on the first single-hop link based on a target identifier in the second identifier and the third identifier.

A manner of determining the target identifier is not limited in embodiments of this application. In some embodiments, the target identifier may be determined by negotiation between the first relay terminal device and the second relay terminal device. In some embodiments, the target identifier may be determined based on some conditions or information. For example, the target identifier may be determined based on a value of an identifier.

For example, the target identifier is determined based on a value of an identifier. In some embodiments, the target identifier may be the identifier with a smaller value in the second identifier and the third identifier. In some embodiments, the target identifier may be the identifier with a larger value in the second identifier and the third identifier.

### Case 3: The first identifier is used to identify a plurality of single-hop links on the first link.

That is, the first link may be identified by using one or more identifiers (the first identifier and another identifier). In this case, it may be considered that identifiers corresponding to some single-hop links on the first link may be the same, and identifiers corresponding to the other single-hop links may be different. That is, different single-hop links on the first link may be identified by using a same identifier, or may be identified by using different identifiers.

In embodiments of this application, the plurality of single-hop links identified by the first identifier are not limited, and may be any multiple single-hop links on the first link. In a possible implementation, the first identifier may be used to identify two single-hop links on the first link. In another possible implementation, the first identifier may be used to identify three or more single-hop links on the first link.

In some embodiments, when the first identifier is used to identify two single-hop links on the first link, the two single-hop links may be two adjacent single-hop links, or the two single-hop links may be two single-hop links associated with a same terminal device (for example, a same relay terminal device). However, embodiments of this application are not limited thereto. The two single-hop links may be any two single-hop links on the first link.

In some embodiments, if the first identifier is used to identify two single-hop links associated with a same relay terminal device, the first identifier may be configured by the relay terminal device associated with the two single-hop links. For example, the first identifier is used to identify two single-hop links associated with the first relay terminal device. In this case, the first identifier may be configured by the first relay terminal device. However, embodiments of this application are not limited thereto. For example, the first identifier may alternatively be configured by a relay terminal device that is not associated with the two single-hop links.

In some embodiments, when the first identifier is used to identify three or more single-hop links on the first link, the three or more single-hop links may be adjacent single-hop links. However, embodiments of this application are not limited thereto. The three or more single-hop links may be any three or more single-hop links on the first link.

In some embodiments, the first identifier being used to identify a plurality of single-hop links on the first link may be understood as or replaced with: the first identifier is used to identify a segment of link on the first link. The segment of link may include a plurality of single-hop links.

### Case 4: The first identifier is used to identify one terminal device on the first link.

That is, the first link may be identified by using a plurality of identifiers, where each identifier in the plurality of identifiers is used to identify one terminal device on the first link. In this case, it may be considered that identifiers corresponding to terminal devices on the first link are different.

In some embodiments, if the first identifier is used to identify one terminal device on the first link, the first identifier may include a terminal device identity (UE ID) of the one terminal device. However, embodiments of this application are not limited thereto. The first identifier may identify one terminal device on the first link in another manner.

In some embodiments, the first identifier may include a terminal device identity of one end terminal device on the first link, to identify the end terminal device by using the first identifier.

In some embodiments, the first identifier may include a terminal device identity of one relay terminal device on the first link, to identify the relay terminal device by using the first identifier.

In some embodiments, the first link may be determined based on terminal device identities of a plurality of terminal devices. For example, the first link may be determined based on terminal device identities of two end terminal devices on the first link. Alternatively, the first link may be determined based on terminal device identities of terminal devices on the first link.

In an example, the first identifier may include a terminal device identity of one end terminal device on the first link, and the first link may be determined by using terminal device identities of two end terminal devices on the first link.

In another example, the first identifier may include a terminal device identity of one terminal device (for example, a relay terminal device or an end terminal device) on a first link, and the first link may be determined by using terminal device identities of terminal devices on the first link.

In some embodiments, for different U2U relay links (for example, the first link and another U2U relay link), terminal device identities (for example, the first identifier) corresponding to a same terminal device entity may be different. In other words, terminal device identities corresponding to a same terminal device on different U2U relay links may be different. For example, the first link includes a UE 1, a UE 2, and a UE 3, and a second link includes the UE 1, a UE 4, and a UE 5. In this case, a terminal device identity (for example, AA123) corresponding to the UE 1 on the first link is different from a terminal device identity (for example, BB123) corresponding to the UE 1 on the second link.

In this way, in embodiments of this application, one link or one data flow may be identified based on terminal device identities of two end terminal devices. For example, the first link includes an end terminal device UE 1, a relay terminal device UE 2, a relay terminal device UE 3, and an end terminal device UE 4, where a terminal device identity of the UE 1 on the first link is AA123, and a terminal device identity of the UE 4 on the first link is AA456; and the second link includes the end terminal device UE 1, a relay terminal device UE 5, a relay terminal device UE 6, and the end terminal device UE4, where a terminal device identity of the UE 1 on the second link is BB123, and a terminal device identity of the UE 4 on the second link is BB456. In this case, the terminal device identity AA123 and the terminal device identity AA456 may be used to identify or determine the first link, and the terminal device identity BB123 and the terminal device identity BB456 may be used to identify or determine the second link.

In embodiments of this application, a first device can configure a first identifier, so that a node on a first link (a multi-hop U2U relay link) can transmit data on the first link according to the first identifier. That is, the first identifier configured by the first device can be used to identify a data flow of the U2U relay link, thereby ensuring normal data transmission.

The following describes the first device and a manner of configuring the first identifier.

In some embodiments, the first link is determined by using one identifier. For example, the first identifier is used to identify the first link. In this case, the one identifier may be configured by one device.

In some embodiments, the first link is determined by using a plurality of identifiers. For example, the first identifier is used to identify one single-hop link or a plurality of single-hop links on the first link, or the first identifier is used to identify one terminal device on the first link. In this case, the plurality of identifiers may be configured by one device or may be configured by a plurality of devices.

In some embodiments, a manner in which all identifiers corresponding to the first link are configured by one device may be understood as being configured by a central node. For example, the central node may configure one identifier to determine the first link. Alternatively, the central node may configure a plurality of identifiers to determine the first link. For example, all the identifiers corresponding to the first link are configured by the first device. In this case, the first device may configure one identifier to determine the first link (for example, the one identifier is used to identify one link), or the first device may configure a plurality of identifiers to determine the first link (for example, each identifier in the plurality of identifiers is used to identify one single-hop link, a plurality of single-hop links, or one terminal device on one link).

In some embodiments, a manner in which all the identifiers corresponding to the first link are configured by a plurality of devices may be understood as being configured by distributed nodes. For example, each device in the plurality of devices may separately configure an identifier corresponding to some single-hop links on the first link. Alternatively, each device in the plurality of devices may separately configure an identifier and the like corresponding to some terminal devices on the first link. For example, all the identifiers corresponding to the first link are configured by the first device and a second device. In this case, the first device and the second device may separately configure one or more identifiers to determine the first link (for example, each identifier in the one or more identifiers may be used to identify one single-hop link, a plurality of single-hop links, or one terminal device on one link).

As mentioned above, the first identifier is configured by the first device. The first device is not limited in embodiments of this application, provided that the first device can configure the first identifier. For example, the first device may be a terminal device on the first link. Alternatively, the first device may be an external device of the first link.

In some embodiments, when the first device is a terminal device on the first link, the first device may be an end terminal device on the first link. For example, the first device may be a source terminal device and/or a target terminal device on the first link.

In some embodiments, when the first device is a terminal device on the first link, the first device may be a relay terminal device on the first link. For example, the first device may be a target relay terminal device on the first link.

In some embodiments, the target relay terminal device may be any relay terminal device that can configure the first identifier on the first link.

In some embodiments, the target relay terminal device may be determined based on a specific condition or specific information. Exemplarily, the target relay terminal device may be determined based on one or more of the following: a distance between a relay terminal device and an end terminal device on the first link; first indication information transmitted by an upper layer; a terminal device capability of a relay terminal device on the first link; whether a relay terminal device on the first link is located within coverage of a network device; or a position of a relay terminal device on the first link.

An implementation of determining the distance between the relay terminal device and the end terminal device on the first link is not limited in embodiments of this application. In a possible implementation, the distance between the relay terminal device and the end terminal device may be indicated by using a quantity of relay hops between the relay terminal device and the end terminal device. That is, the target relay terminal device may be determined based on the quantity of relay hops between the relay terminal device and the end terminal device on the first link. However, embodiments of this application are not limited thereto. For example, the distance between the relay terminal device and the end terminal device may alternatively be indicated by a distance (for example, how many meters apart) between terminal device entities.

In some embodiments, the upper layer may be an upper layer of an RRC layer or may be an upper layer of an adaptation layer. That is, the RRC layer or the adaptation layer may determine the target relay terminal device based on first indication information transmitted by the upper layer of the RRC layer or the adaptation layer. In an example, upper layers of nodes on the first link may determine the target relay terminal device by negotiation, and indicate the determined target relay terminal device to the RRC layer or the adaptation layer.

In some embodiments, the upper layer may refer to the upper layers of the nodes on the first link. For example, an upper layer of each node may transmit first indication information to an RRC layer or an adaptation layer of each node.

In some embodiments, the upper layer may refer to an upper layer of the target relay terminal device. For example, after upper layers of nodes determine the target relay terminal device by negotiation, an upper layer of the target relay terminal device may transmit first indication information to an RRC layer or an adaptation layer of the target relay terminal device.

In some embodiments, the upper layer may include one or more of the following: an application layer, a ProSe layer, a V2X layer, or the like.

Exemplarily, the target relay terminal device may include one or more of the following: a relay terminal device nearest to an end terminal device on the first link, a relay terminal device indicated by first indication information transmitted by an upper layer, a relay terminal device determined based on a terminal device capability, a relay terminal device located within network coverage on the first link, or a relay terminal device located in a center of the first link.

In some embodiments, the relay terminal device nearest to the end terminal device on the first link may refer to a relay terminal device with a minimum quantity of relay hops away from the end terminal device. In other words, the target relay terminal device may be the relay terminal device with the minimum quantity of relay hops away from the end terminal device.

In some embodiments, the relay terminal device nearest to the end terminal device on the first link may refer to a relay terminal device nearest to a source terminal device. In other words, the target relay terminal device may be the relay terminal device nearest to the source terminal device.

In some embodiments, the relay terminal device nearest to the end terminal device on the first link may refer to a relay terminal device nearest to a target terminal device. In other words, the target relay terminal device may be the relay terminal device nearest to the target terminal device.

In some embodiments, the foregoing end terminal device (for example, the source terminal device or the target terminal device) may be pre-defined in a protocol, pre-configured, or configured by a network, which is not limited in embodiments of this application. For example, the protocol may specify that the relay terminal device nearest to the end terminal device refers to the relay terminal device nearest to the source terminal device. Alternatively, the network may configure that the relay terminal device nearest to the end terminal device refers to the relay terminal device nearest to the target terminal device, or the like.

In some embodiments, the relay terminal device being determined based on the terminal device capability may refer to: a relay terminal device with the strongest terminal device capability on the first link is determined as the target relay terminal device, or in other words, the target relay terminal device may be the relay terminal device with the strongest terminal device capability on the first link. However, embodiments of this application are not limited thereto. In some embodiments, a relay terminal device with the weakest capability or a medium capability on the first link may alternatively be determined as the target relay terminal device.

In some embodiments, the target relay terminal device may be a relay terminal device located within network coverage on the first link. However, this application is not limited thereto. In some embodiments, the target relay terminal device may alternatively be a relay terminal device located outside the network coverage on the first link.

In some embodiments, the target relay terminal device may be a relay terminal device located in a center of the first link. However, this application is not limited thereto. In some embodiments, the target relay terminal device may alternatively be a relay terminal device located at another position on the first link.

In some embodiments, the target relay terminal device may be determined based on one of the foregoing manner. For example, the target relay terminal device is a relay terminal device nearest to an end terminal device on the first link. Alternatively, the target relay terminal device is a relay terminal device indicated by indication information transmitted by an upper layer. Alternatively, the target relay terminal device is a relay terminal device located in a center of the first link, or the like.

In some embodiments, the target relay terminal device may be determined based on a plurality of the foregoing manners. For example, the target relay terminal device is a relay terminal device nearest to an end terminal device and located within network coverage on the first link. Alternatively, the target relay terminal device is a relay terminal device that is located in a center of the first link and that has a relatively strong terminal device capability. Alternatively, the target relay terminal device is a relay terminal device located in a center of the first link and located within network coverage, or the like.

In some embodiments, a plurality of target relay terminal devices may be determined based on one of the foregoing manner. For example, distances (for example, quantities of relay hops) between a plurality of (for example, two or more) relay terminal devices and an end terminal device (for example, a source terminal device) are the same. Alternatively, terminal device capabilities of a plurality of relay terminal devices on the first link are the same or close to each other. Alternatively, a plurality of relay terminal devices on the first link are located within the coverage of the network device. Alternatively, a plurality of relay terminal devices are located in the center of the first link. To solve the foregoing problem, in a possible implementation, the target relay terminal device may be selected randomly from a plurality of relay terminal devices that meet a condition. In another possible implementation, the target relay terminal device may be determined based on a plurality of the foregoing manners, or in other words, when a plurality of relay terminal devices are determined based on one of the foregoing manner, more conditions or information may be considered to jointly determine the target relay terminal device. For example, if distances between a plurality of relay terminal devices and an end terminal device are the same, it may be considered that a relay terminal device located within network coverage in the plurality of relay terminal devices is determined as the target relay terminal device. Alternatively, if terminal device capabilities of a plurality of relay terminal devices are the same, it may be considered that a relay terminal device located in the center of the first link in the plurality of relay terminal devices is determined as the target relay terminal device.

In some embodiments, when the first device is an external device of the first link, the first device may be a serving terminal device (serving UE or service UE) of a terminal device on the first link, or the first device may be a network device. This is not limited in embodiments of this application.

The serving terminal device of the terminal device on the first link is not limited in embodiments of this application. For example, the serving terminal device may be a serving terminal device of an end terminal device (for example, a source terminal device or a target terminal device). Alternatively, the serving terminal device may be a serving terminal device of a relay terminal device.

A manner of carrying the first identifier is not limited in embodiments of this application. Exemplarily, the first identifier is carried by a first message. In this case, the first message may be a message used for sidelink transmission, a message used for downlink transmission, or the like.

In some embodiments, if the first identifier is configured by a terminal device on the first link, the first message that carries the first identifier may be a message used for sidelink transmission. For example, the first identifier is configured by an end terminal device on the first link, and the first message may be a message used for sidelink transmission. Alternatively, the first identifier is configured by a relay terminal device on the first link, and the first message may be a message used for sidelink transmission.

In some embodiments, if the first identifier is configured by a serving terminal device of a terminal device on the first link, the first message that carries the first identifier may be a message used for sidelink transmission. For example, the first identifier is configured by a serving terminal device of an end terminal device on the first link, and the first message may be a message used for sidelink transmission. Alternatively, the first identifier is configured by a serving terminal device of a relay terminal device on the first link, and the first message may be a message used for sidelink transmission.

In some embodiments, if the first message is a message used for sidelink transmission, the first message may be one or more of the following: a PC5-RRC message or a PC5-S message.

In some embodiments, the first message may include configuration information of an SRAP layer, and the configuration information may include the first identifier. For example, if the first message is a PC5-RRC message, the first message may include configuration information of an SRAP layer, and the configuration information includes the first identifier.

In some embodiments, if the first identifier is configured by a network device, the first message that carries the first identifier may be a message used for downlink transmission.

In some embodiments, if the first message is a message used for downlink transmission, the first message may include one or more of the following: an RRC message, a MAC CE, DCI, or the like.

In some embodiments, the first identifier is independent of a data transmission direction. That is, a same single-hop link may correspond to one identifier, and the identifier may be used in two data transmission directions corresponding to the single-hop link.

In some embodiments, the first identifier is dependent on a data transmission direction. That is, a same single-hop link may correspond to two identifiers, and the two identifiers respectively correspond to two data transmission directions corresponding to the single-hop link (or the two identifiers are respectively used for different data transmission directions). That is, each identifier in the two identifiers is used in only one data transmission direction in the two data transmission directions corresponding to the single-hop link. In other words, identifiers used for different data transmission directions may be configured for a same single-hop link.

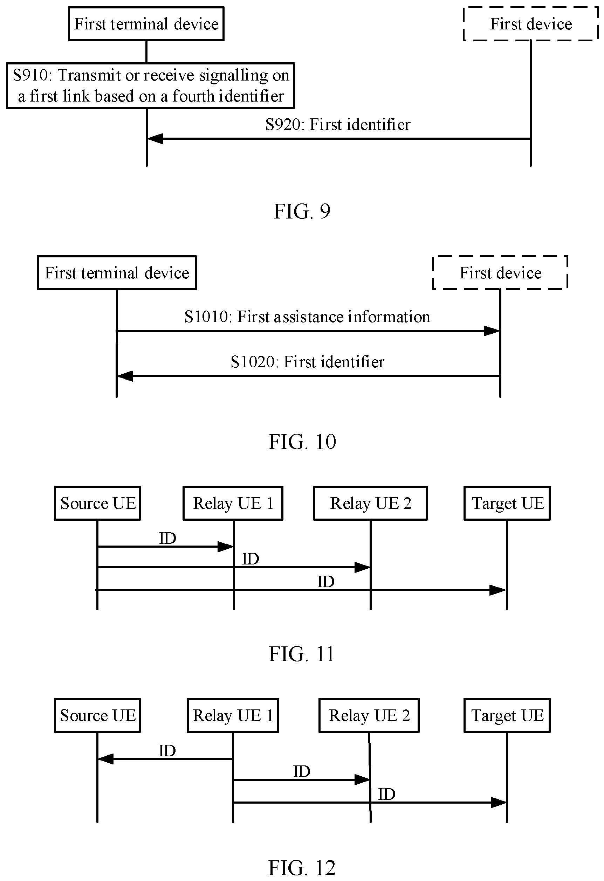

In some embodiments, before the first terminal device receives the first identifier, the first terminal device may perform data transmission based on another identifier, to ensure normal transmission of a data flow of the first link. The following describes this in detail with reference to FIG. 9.

FIG. 9 is a schematic flowchart of a wireless communication method according to another embodiment of this application. The method shown in FIG. 9 may include step S910 and step S920.

In step S910, a first terminal device transmits or receives signalling on a first link based on a fourth identifier.

In some embodiments, the fourth identifier may include one of the following: a default identifier, an identifier determined based on protocol pre-defined information (or referred to as a protocol pre-defined identifier), or an identifier determined based on a first mapping relationship.

Embodiments of this application set no limitation on an implementation of the default identifier or the identifier determined based on protocol pre-defined information, and the identifier may be an identifier that is arbitrarily set according to an actual requirement.

In some embodiments, the default identifier or the protocol pre-defined identifier may be targeted at all terminal devices, that is, all terminal devices may use a same identifier. For example, the default identifier or the protocol pre-defined identifier may be "0000".

In some embodiments, the default identifier or the protocol pre-defined identifier may be targeted at a specific terminal device or a specific terminal device group, that is, different terminal devices may use different identifiers. For example, the default identifier or the protocol pre-defined identifier may be determined based on an ID of a terminal device, for example, may be determined based on an ID of an end terminal device on the first link (for example, an ID of a source terminal device or an ID of a target terminal device). In an example, the default identifier or the protocol pre-defined identifier may be the least significant N bits (N is a positive integer greater than or equal to 2) of a layer 2 ID of an end terminal device on the first link. In another example, the default identifier or the protocol pre-defined identifier may be the most significant M bits (M is a positive integer greater than or equal to 2) of a layer 2 ID of an end terminal device on the first link. In still another example, the default identifier or the protocol pre-defined identifier may be determined based on a higher-layer ID (for example, a layer 3 ID) of an end terminal device on the first link. For example, the default identifier or the protocol pre-defined identifier may be the least significant N bits or the most significant M bits of the higher-layer ID of the end terminal device on the first link.

The first mapping relationship is not limited in embodiments of this application. Exemplarily, the first mapping relationship may be associated with one or more of the following information: a service, a service identifier, a relay service code, an ID of a terminal device, or the like.

In some embodiments, the first mapping relationship may include one or more of the following: a mapping relationship between a service and the fourth identifier, a mapping relationship between a service identifier and the fourth identifier, a mapping relationship between a relay service code and the fourth identifier, or a mapping relationship between a layer 2 ID of a terminal device and the fourth identifier.

In step S920, the first terminal device receives a first identifier configured by a first device.

After receiving the first identifier, the first terminal device may subsequently perform data transmission based on the first identifier.

For detailed descriptions of step S920, reference may be made to the foregoing descriptions of step S810. For brevity, details are not described herein again.

In some embodiments, an identifier configured by the first device may be determined based on assistance information. With reference to FIG. 10, the following provides detailed descriptions by using an example in which configuration of the first identifier may be determined based on first assistance information.

FIG. 10 is a schematic flowchart of a wireless communication method according to still another embodiment of this application. The method shown in FIG. 10 may include step S1010 and step S1020.

In step S1010, a first terminal device transmits first assistance information to a first device. The first assistance information is used to determine a first identifier.

In some embodiments, the transmission of the first assistance information is triggered based on a condition, for example, a request or an event.

A trigger condition of the first assistance information is not limited in embodiments of this application. For example, the transmission of the first assistance information is triggered based on a first condition. The first condition may include one or more of the following: the first terminal device receives information for requesting assistance information; the first terminal device receives a data packet that includes a new identifier or an unknown identifier; the first terminal device establishes a new sidelink based on a relay terminal device; configured identities of the first terminal device conflict with each other; the first terminal device receives second assistance information transmitted by another terminal device, where the second assistance information is used to determine an identifier associated with a first link; or the like.

In an example, when the first terminal device receives the information for requesting assistance information that is transmitted by the first device, the first terminal device may transmit the first assistance information to the first device.

In another example, when the first terminal device receives the data packet that includes the new identifier or the unknown identifier, the first terminal device may transmit the first assistance information to the first device.

In still another example, when receiving the second assistance information transmitted by the another terminal device, the first terminal device may transmit the first assistance information to the first device.

In some embodiments, if the first terminal device receives the second assistance information transmitted by the another terminal device, the first terminal device may further transmit the second assistance information when transmitting the first assistance information. In an implementation, the first terminal device may transmit the first assistance information and the second assistance information to the first device. In another implementation, the first terminal device may carry the second assistance information in the first assistance information, and then transmit the first assistance information to the first device.

Content included in the first assistance information is not specifically limited in embodiments of this application. Exemplarily, the first assistance information may be associated with one or more of the following information: identity information of the first terminal device, information about a terminal device adjacent to the first terminal device on the first link, or related information of the first terminal device on the first link.

In some embodiments, the identity information of the first terminal device may include an identity corresponding to the first terminal device on a U2U relay link. In some embodiments, the identity information of the first terminal device may include an ID (for example, a layer 2 ID or a higher-layer ID) of the first terminal device.

In some embodiments, the first assistance information may include one or more of the following: a configured identity of the first terminal device; a position of the first terminal device on the first link; a layer 2 identity of the first terminal device; a layer 2 identity of a previous-hop terminal device of the first terminal device; a layer 2 identity of a next-hop terminal device of the first terminal device; or information indicating that the first terminal device is a relay terminal device or an end terminal device.

In some embodiments, the configured identity of the first terminal device may include an identity of the first terminal device on another link except the first link.

In some embodiments, the position of the first terminal device on the first link may include one of the following: the first terminal device is located at a position of a source terminal device on the first link, the first terminal device is located at a position of a target terminal device on the first link, the first terminal device is located at a position of a relay terminal device on the first link (which, for example, is specifically a position of which relay terminal device), or a hop count of the first terminal device on the first link.

In some embodiments, the first assistance information may be directly transmitted by the first terminal device to the first device.

In some embodiments, the first assistance information may be transmitted by the first terminal device to the first device by using another terminal device on the first link. For example, the first assistance information may be transmitted by the first terminal device to the first device through a second terminal device, where the second terminal device is connected with the first terminal device via a single-hop link.

In step S1020, the first terminal device receives the first identifier configured by the first device.

For other detailed descriptions of step S1020, reference may be made to the foregoing descriptions of step S810. For brevity, details are not described herein again.

In some embodiments, the first identifier may be configured after the first device receives assistance information transmitted by the terminal devices on the first link, where the first device is an external device of the first link.

In some embodiments, the first identifier may be configured after the first device receives assistance information transmitted by terminal devices except the first device on the first link, where the first device is a terminal device on the first link.

In some embodiments, the first identifier may be configured after the first device receives assistance information transmitted by at least one terminal device on the first link.

In some embodiments, the first identifier may be configured after a time following transmission of request information reaches a first duration, where the request information is used to request assistance information.

In some embodiments, the first identifier may be configured after a time following establishment of a connection of the first link reaches a second duration.

In some embodiments, the configuration of the first identifier is not related to whether assistance information is received. In other words, the first device may configure the first identifier without waiting for the assistance information.

In some embodiments, after receiving the first identifier, the first terminal device may perform data transmission based on the first identifier. For example, in some embodiments, the first terminal device may transmit or receive a first data packet, where the first data packet includes the first identifier.

In some embodiments, the first data packet transmitted or received by the first terminal device may be a data packet of an SRAP layer. In some embodiments, the data packet of the SRAP layer may include the first identifier.

In some embodiments, after receiving the first data packet, the first terminal device may maintain a mapping relationship between an ingress-hop (ingress-hop) of a single-hop link corresponding to the first data packet and an egress-hop (egress-hop) of the single-hop link, to transmit the first data packet to a terminal device corresponding to a next hop.

For example, the first terminal device is associated with a second single-hop link and a third single-hop link, the first identifier may be used to identify the second single-hop link, and the first data packet is a data packet transmitted to the first terminal device by using the second single-hop link. In this case, after replacing the first identifier with a fifth identifier, the first terminal device may forward the first data packet by using the third single-hop link. The fifth identifier may be used to identify the third single-hop link.

In some embodiments, the fifth identifier is determined by the first terminal device based on the first identifier and a mapping relationship between the first identifier and the fifth identifier.

For ease of understanding, the following provides several embodiments by using different functions of the first identifier as an example. It should be noted that the following embodiments are merely used as examples.

### Embodiment 1: A first identifier is used to identify a first link.

In Embodiment 1, the first identifier may be used to identify one complete U2U relay link (the first link).

In Embodiment 1, the first identifier may be carried in a first data packet (for example, a data packet of an SRAP layer) as an identifier of the first link. In this way, after receiving the first data packet, a terminal device on the first link may know a link to which the first data packet belongs, thereby knowing how to process the first data packet.

In some embodiments, the first identifier in Embodiment 1 may alternatively be used to identify one end terminal device on the first link. In this way, the first link may be identified according to identities of two end terminal devices.

In Embodiment 1, the first identifier may be allocated by a first device. In other words, in Embodiment 1, an identifier associated with the first link may be configured in a manner in which a central node configures an identifier, where the central node is the first device.

In some embodiments, the first device may be one of the following: an end terminal device on the first link, a target relay terminal device on the first link, or an external device of the first link.

In some embodiments, the target relay terminal device on the first link may include one or more of the following: a relay terminal device with the smallest quantity of relay hops away from an end terminal device on the first link, a relay terminal device indicated by an upper layer (for example, an application layer, a ProSe layer, or a V2X layer), a relay terminal device determined based on a terminal device capability of a relay terminal device on the first link, a relay terminal device located within coverage of a network device on the first link, or a relay terminal device located in a center of the first link.

In some embodiments, the external device of the first link may include one or more of the following: a serving terminal device of a terminal device on the first link, or a network device.

In some embodiments, the serving terminal device of the terminal device on the first link may be, for example, a serving terminal device of an end terminal device on the first link. In some embodiments, the serving terminal device of the terminal device on the first link may be, for example, a serving terminal device of a relay terminal device on the first link.

In some embodiments, after configuring the first identifier, the first device may transmit the first identifier to terminal devices on the first link. In an implementation, the first device may directly transmit the first identifier to the terminal devices on the first link. That is, the first device may transmit the first identifier to the terminal devices across hops (across hops). In another implementation, the first device may transmit the first identifier to the terminal devices on the first link by using another terminal device on the first link. For example, the first device may transmit the first identifier to terminal devices directly connected to the first device, and each of the terminal devices sequentially transmits the first identifier to subsequent terminal devices directly connected to the terminal device.

The following separately describes the two implementations.

### Implementation 1: The first device directly transmits the first identifier to the terminal devices on the first link.

For example, the first device is an end terminal device on the first link. In this case, the end terminal device on the first link may directly transmit the first identifier to the terminal devices on the first link. For example, the first device may be a source terminal device, and the source terminal device may transmit the first identifier to a target terminal device and relay terminal devices. Alternatively, the first device may be a target terminal device, and the target terminal device may transmit the first identifier to a source terminal device and relay terminal devices. FIG. 11 shows a case in which the first device is a source terminal device, and the source terminal device may transmit the first identifier to a target terminal device and relay terminal devices.

For example, the first device is a relay terminal device on the first link. Referring to FIG. 12, the relay terminal device on the first link may directly transmit the first identifier to two end terminal devices and another relay terminal device on the first link.

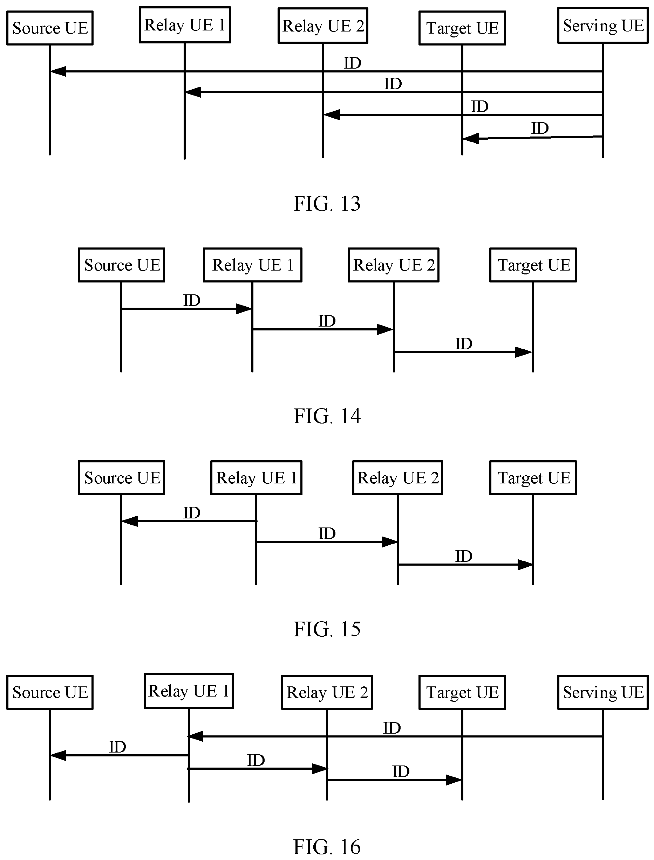

For example, the first device is a serving terminal device of a terminal device on the first link. Referring to FIG. 13, the serving terminal device may directly transmit the first identifier to the terminal devices (including the two end terminal devices and the relay terminal devices) on the first link.

In some embodiments, the first identifier may be carried in a PC5-RRC message or a PC5-S message.

In some embodiments, if the first identifier is carried in a PC5-RRC message, the PC5-RRC message may include configuration information of an SRAP layer.

In some embodiments, the first identifier may be independent of a data transmission direction. In other words, a same single-hop link may correspond to only one identifier, and the identifier may be used in two data transmission directions corresponding to the single-hop link.

In some embodiments, the first identifier may be dependent on a data transmission direction. In other words, a same single-hop link may correspond to two identifiers, and the two identifiers respectively correspond to two data transmission directions corresponding to the single-hop link (or the two identifiers are respectively used for different data transmission directions). A single-hop link between the first relay terminal device and the second relay terminal device is used as an example. The first relay terminal device may transmit data to the second relay terminal device by using an identifier configured by the first relay terminal device, and the second relay terminal device may transmit data to the first relay device by using an identifier configured by the second relay terminal device.

In some embodiments, before receiving an identifier configured by the first device, a terminal device on the first link may transmit or receive data or signalling on the first link by using a fourth identifier. The fourth identifier may include one or more of the following: a default identifier, an identifier determined based on protocol pre-defined information, or an identifier determined based on a first mapping relationship.

In some embodiments, the default identifier or the identifier determined based on the protocol pre-defined information may be, for example, "0000", or the least significant N bits or the most significant N bits of a layer 2 ID of an end terminal device on the first link, or a higher-layer ID of an end terminal device on the first link.

In some embodiments, the first mapping relationship may include one or more of the following: a mapping relationship between a service and the fourth identifier, a mapping relationship between a service identifier and the fourth identifier, a mapping relationship between a relay service code and the fourth identifier, or a mapping relationship between a layer 2 identity of a terminal device and the fourth identifier.

In some embodiments, the terminal devices on the first link may transmit assistance information to the first device, to determine the first identifier.

In some embodiments, the assistance information may be triggered by a request or an event.

In some embodiments, a trigger condition of the assistance information may include one or more of the following: information for requesting assistance information that is transmitted by the first device is received, a data packet that includes a new identifier or an unknown identifier is received, a new sidelink based on a relay terminal device is established (or referred to as: a new sidelink used for a relay service is established); or configured identifiers conflict with each other.

In some embodiments, the assistance information may include one or more of the following: a configured identity (for example, an identity on another U2U relay link) of a terminal device that transmits the assistance information, a hop count of a terminal device that transmits the assistance information, a layer 2 ID of a terminal device that transmits the assistance information, a layer 2 ID of a previous-hop terminal device of a terminal device that transmits the assistance information, a layer 2 ID of a next-hop terminal device of a terminal device that transmits the assistance information, or information indicating that a terminal device that transmits the assistance information is a relay device or an end terminal device.

In some embodiments, the first identifier may be configured after the first device receives assistance information transmitted by the terminal devices on the first link, where the first device is an external device of the first link.

In some embodiments, the first identifier may be configured after the first device receives assistance information transmitted by terminal devices except the first device on the first link, where the first device is a terminal device on the first link.

In some embodiments, the first identifier may be configured after the first device receives assistance information transmitted by at least one terminal device on the first link.

In some embodiments, the first identifier may be configured after a time following transmission of request information reaches a first duration, where the request information is used to request assistance information.

In some embodiments, the first identifier may be configured after a time following establishment of a connection of the first link reaches a second duration.

In some embodiments, the configuration of the first identifier is not related to whether assistance information is received.

### Implementation 2: The first device transmits the first identifier to terminal devices directly connected to the first device.

After transmitting the first identifier to the terminal devices directly connected to the first device, each of the terminal devices sequentially transmits the first identifier to subsequent terminal devices directly connected to the terminal device.

For example, the first device is an end terminal device on the first link. In this case, the end terminal device on the first link may transmit the first identifier to the first relay terminal device connected to the end terminal device, and then the first relay terminal device transmits the first identifier to the second relay terminal device directly connected to the first relay terminal device or the like. For example, the first device may be a source terminal device, and the source terminal device may transmit the first identifier to the first relay terminal device connected to the source terminal device, and then the first relay terminal device transmits the first identifier to the second relay terminal device directly connected to the first relay terminal device. The rest may be deduced by analogy until a relay terminal device transmits the first identifier to a target terminal device directly connected to the relay terminal device. Alternatively, the first device may be a target terminal device, and the target terminal device may transmit the first identifier to the first relay terminal device connected to the target terminal device, and then the first relay terminal device transmits the first identifier to the second relay terminal device directly connected to the first relay terminal device. The rest may be deduced by analogy until a relay terminal device transmits the first identifier to a source terminal device directly connected to the relay terminal device. FIG. 14 shows a case in which the first device is a source terminal device and the source terminal device transmits the first identifier.

For example, the first device is a relay terminal device on the first link. In this case, the relay terminal device may transmit the first identifier to an end terminal device directly connected to the relay terminal device and/or other relay terminal devices, and then the other relay terminal devices sequentially transmit the first identifier to terminal devices directly connected to the other relay terminal devices. Referring to FIG. 15, the first device is a relay terminal device 1 on the first link, and the relay terminal device 1 may transmit the first identifier to a source terminal device directly connected to the first device 1 and a relay terminal device 2, and then the relay terminal device 2 may transmit the first identifier to a target terminal device.

For example, the first device is a serving terminal device of a terminal device on the first link. In this case, the serving terminal device may transmit the first identifier to terminal devices directly connected to the serving terminal device on the first link, and then the terminal devices directly connected to the serving terminal device sequentially transmit the first identifier to other terminal devices directly connected to the terminal devices. Referring to FIG. 16, the first device is a serving terminal device of a relay terminal device 1, and the serving terminal device may transmit the first identifier to the relay terminal device 1 directly connected to the serving terminal device. The relay terminal device 1 may transmit the first identifier to a source terminal device directly connected to the relay terminal device 1 and a relay terminal device 2. Then, the relay terminal device 2 transmits the first identifier to a target terminal device directly connected to the relay terminal device 2.

In some embodiments, the first identifier may be carried in a PC5-RRC message or a PC5-S message.

In some embodiments, if the first identifier is carried in a PC5-RRC message, the PC5-RRC message may include configuration information of an SRAP layer.

In some embodiments, the first identifier may be independent of a data transmission direction. In other words, a same single-hop link may correspond to only one identifier, and the identifier may be used in two data transmission directions corresponding to the single-hop link.

In some embodiments, the first identifier may be dependent on a data transmission direction. In other words, a same single-hop link may correspond to two identifiers, and the two identifiers respectively correspond to two data transmission directions corresponding to the single-hop link (or the two identifiers are respectively used for different data transmission directions). A single-hop link between the first relay terminal device and the second relay terminal device is used as an example. The first relay terminal device may transmit data to the second relay terminal device by using an identifier configured by the first relay terminal device, and the second relay terminal device may transmit data to the first relay terminal device by using an identifier configured by the second relay terminal device.

In some embodiments, before receiving an identifier configured by the first device, a terminal device on the first link may transmit or receive data or signalling on the first link by using a fourth identifier. The fourth identifier may include one or more of the following: a default identifier, an identifier determined based on protocol pre-defined information, or an identifier determined based on a first mapping relationship.

In some embodiments, the default identifier or the identifier determined based on the protocol pre-defined information may be, for example, "0000", or the least significant N bits or the most significant N bits of a layer 2 ID of an end terminal device on the first link, or a higher-layer ID of an end terminal device on the first link.

In some embodiments, the first mapping relationship may include one or more of the following: a mapping relationship between a service and the fourth identifier, a mapping relationship between a service identifier and the fourth identifier, a mapping relationship between a relay service code and the fourth identifier, or a mapping relationship between a layer 2 identity of a terminal device and the fourth identifier.

In some embodiments, the terminal devices on the first link may transmit assistance information to the first device, to determine the first identifier.

In some embodiments, the assistance information may be transmitted by the terminal devices on the first link to previous-hop terminal devices directly connected to the terminal devices. The terminal devices that receive the assistance information may add corresponding information of the terminal devices in the assistance information, and transfer the assistance information backward (if the terminal devices are not the first device) until the assistance information is transferred to the first device.

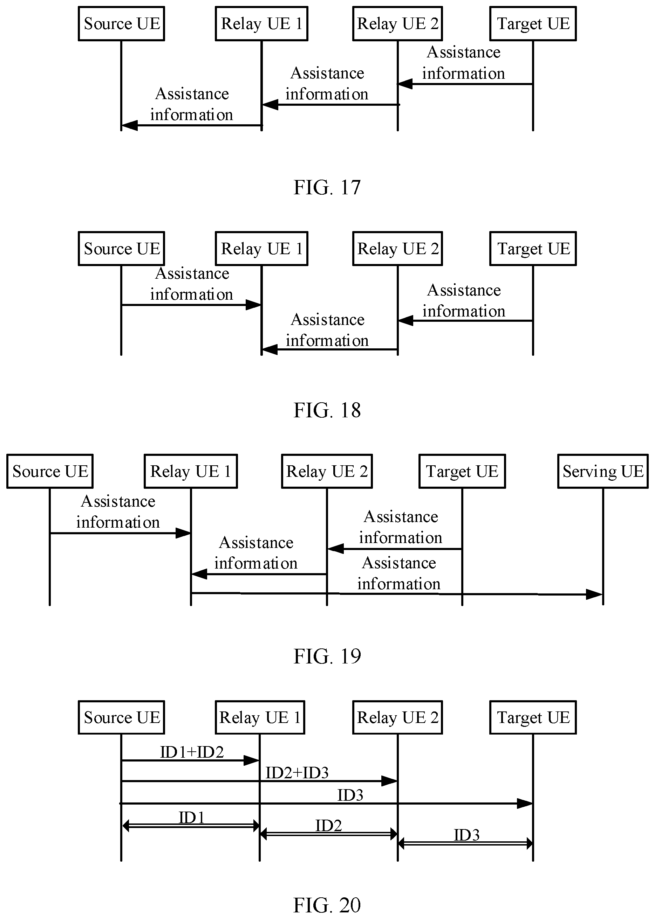

FIG. 17 shows a case in which the first device is a source terminal device and the source terminal device receives assistance information. As shown in FIG. 17, a target terminal device may transmit the assistance information to a relay terminal device 2 directly connected to the target terminal device. The relay terminal device 2 may add corresponding information of the relay terminal device 2 in the assistance information, and transmit the assistance information to a relay terminal device 1. Then, the relay terminal device 1 may add corresponding information of the relay terminal device 1 in the assistance information, and transmit the assistance information to the source terminal device.

FIG. 18 shows a case in which the first device is a relay terminal device, and the relay terminal device receives assistance information. As shown in FIG. 18, the first device is a relay terminal device 1. A source terminal device may transmit the assistance information to the relay terminal device 1 directly connected to the source terminal device. A target terminal device may transmit the assistance information to a relay terminal device 2 directly connected to the target terminal device. The relay terminal device 2 may add corresponding information of the relay terminal device 2 in the assistance information, and transmit the assistance information to the relay terminal device 1.

FIG. 19 shows a case in which the first device is a serving terminal device, and the serving terminal device receives assistance information. As shown in FIG. 19, the first device is a serving terminal device of a relay terminal device 1. A source terminal device may transmit the assistance information to the relay terminal device 1 directly connected to the source terminal device. A target terminal device may transmit the assistance information to a relay terminal device 2 directly connected to the target terminal device. The relay terminal device 2 may add corresponding information of the relay terminal device 2 in the assistance information, and transmit the assistance information to the relay terminal device 1. Then, the relay terminal device 1 may combine the assistance information transmitted by the source terminal device and the assistance information transmitted by the relay terminal device 2, add corresponding information of the relay terminal device 1 in the assistance information, and finally transmit the assistance information to the serving terminal device.

In some embodiments, the assistance information may be triggered by a request or an event.

In some embodiments, a trigger condition of the assistance information may include one or more of the following: information for requesting assistance information that is transmitted by the first device is received, a data packet that includes a new identifier or an unknown identifier is received, a new sidelink based on a relay terminal device is established (or referred to as: a new sidelink used for a relay service is established); configured identifiers conflict with each other; or assistance information transmitted by another terminal device is received.

In some embodiments, the assistance information may include one or more of the following: a configured identity (for example, an identity on another U2U relay link) of a terminal device that transmits the assistance information, a hop count of a terminal device that transmits the assistance information, a layer 2 ID of a terminal device that transmits the assistance information, a layer 2 ID of a previous-hop terminal device of a terminal device that transmits the assistance information, a layer 2 ID of a next-hop terminal device of a terminal device that transmits the assistance information, or information indicating that a terminal device that transmits the assistance information is a relay device or an end terminal device.

In some embodiments, the first identifier may be configured after the first device receives assistance information transmitted by the terminal devices on the first link, where the first device is an external device of the first link.

In some embodiments, the first identifier may be configured after the first device receives assistance information transmitted by terminal devices except the first device on the first link, where the first device is a terminal device on the first link.

In some embodiments, the first identifier may be configured after the first device receives assistance information transmitted by at least one terminal device on the first link.

In some embodiments, the first identifier may be configured after a time following transmission of request information reaches a first duration, where the request information is used to request assistance information.

In some embodiments, the first identifier may be configured after a time following establishment of a connection of the first link reaches a second duration.

In some embodiments, the configuration of the first identifier is not related to whether assistance information is received.

### Embodiment 2: A first identifier is used to identify one single-hop link on a first link.

In Embodiment 2, the first identifier may be carried in a first data packet (for example, a data packet of an SRAP layer) as an identifier of one single-hop link on the first link. In this way, after receiving the first data packet, a terminal device on the first link may know a hop from which the first data packet comes and a hop to which the first data packet is to be transmitted, and/or how to process the data packet.

In some embodiments, each relay terminal device needs to maintain a mapping relationship from an ingress-hop to an egress-hop. For example, each relay terminal device needs to fill in one or more of the following information in the first data packet.

Information 1: egress-hop identifier. Exemplarily, after receiving the first data packet, each relay terminal device may fill in an egress-hop identifier of the first data packet again according to an identifier carried in the first data packet and a mapping relationship between an ingress-hop identifier and the egress-hop identifier.

Information 2: ingress-hop identifier and egress-hop identifier. In some embodiments, an ingress-hop identifier of an end terminal device may be empty or a default value (for example, 0000 or 1111). In some embodiments, after receiving the first data packet, each relay terminal device may fill in an egress-hop identifier of the first data packet again according to an identifier carried in the first data packet and a mapping relationship between an ingress-hop identifier and the egress-hop identifier.

In some embodiments, identifiers of single-hop links on the first link are configured by one device, that is, an identifier of the first link is configured by a central node. In some embodiments, identifiers of single-hop links on the first link are configured by a plurality of devices, that is, an identifier of the first link is configured by distributed nodes. The following separately provides descriptions with reference to Embodiment 2.1 and Embodiment 2.2.

### Embodiment 2.1: The central node configures the identifier.

That is, the first device (the central node) may configure an identifier of each single-hop link on the first link.

For descriptions of the first device, reference may be made to the descriptions in Embodiment 1. For brevity, details are not described herein again.

In some embodiments, after configuring the identifier of each single-hop link, the first device may transmit each identifier to each terminal device on the first link. In an implementation, the first device may directly transmit each identifier to the terminal device associated with each identifier. That is, the first device may transmit a respective identifier to each terminal device across hops (across hops). In another implementation, the first device may transmit a respective identifier to each terminal device on the first link by using another terminal device on the first link. For example, the first device may transmit the first identifier to terminal devices directly connected to the first device, and each terminal device sequentially transmits one or more identifiers associated with subsequent terminal devices to a next terminal device directly connected to the terminal device.

The following separately describes the two implementations.

### Implementation 1: The first device directly transmits the identifier of each single-hop link to each terminal device on the first link.

FIG. 20 shows a case in which the first device is a source terminal device, and the source terminal device configures the identifier of each single-hop link. As shown in FIG. 20, the source terminal device may directly transmit two identifiers ID1 and ID2 that are associated with a relay terminal device 1 to the relay terminal device 1. The source terminal device may directly transmit two identifiers ID2 and ID3 that are associated with a relay terminal device 2 to the relay terminal device 2. The source terminal device may directly transmit one identifier ID3 associated with a target terminal device to the target terminal device.

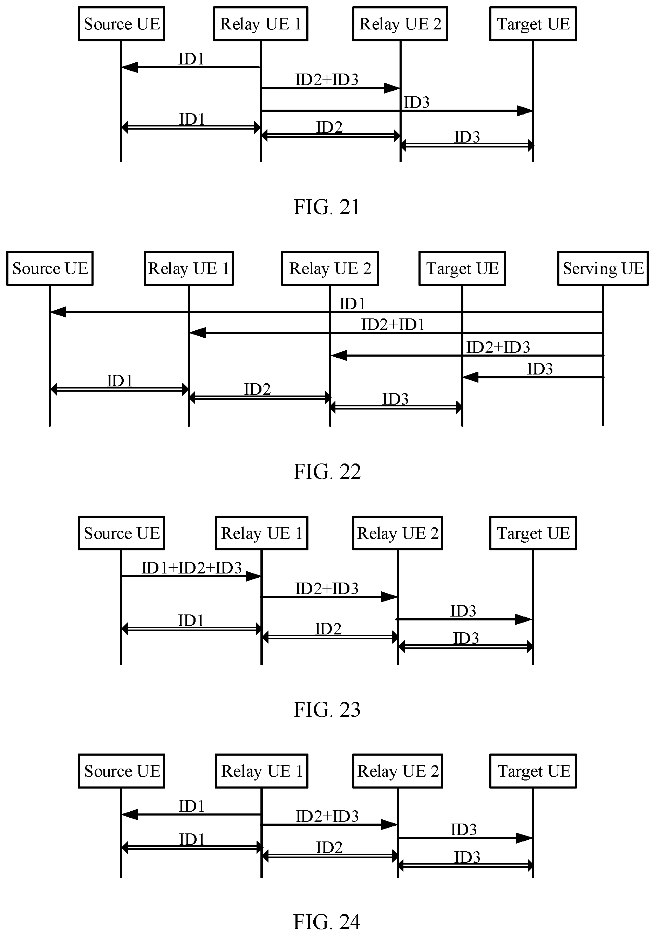

FIG. 21 shows a case in which the first device is a relay terminal device, and the relay terminal device configures the identifier of each single-hop link. As shown in FIG. 21, the first device is a relay terminal device 1. The relay terminal device 1 may directly transmit one identifier ID1 associated with a source terminal device to the source terminal device. The relay terminal device 1 may directly transmit two identifiers ID2 and ID3 that are associated with a relay terminal device 2 to the relay terminal device 2. The relay terminal device 1 may directly transmit one identifier ID3 associated with a target terminal device to the target terminal device.

FIG. 22 shows a case in which the first device is a serving terminal device, and the serving terminal device configures the identifier of each single-hop link. As shown in FIG. 22, the serving terminal device may directly transmit one identifier ID1 associated with a source terminal device to the source terminal device. The serving terminal device may directly transmit two identifiers ID1 and ID2 that are associated with a relay terminal device 1 to the relay terminal device 1. The serving terminal device may directly transmit two identifiers ID2 and ID3 that are associated with a relay terminal device 2 to the relay terminal device 2. The serving terminal device may directly transmit one identifier ID3 associated with a target terminal device to the target terminal device.

For other solutions that are not described in detail, reference may be made to the descriptions in Embodiment 1, for example, a manner of carrying an identifier, and transmission of assistance information. For brevity, details are not described herein again.

### Implementation 2: The first device transmits the identifier of each single-hop link to terminal devices directly connected to the first device.

After the first device transmits the first identifier to the terminal devices directly connected to the first device, each terminal device configures identifiers of one or more single-hop links associated with the terminal device, and subsequently transmits identifiers of one or more single-hop links associated with subsequent terminal devices to a next terminal device directly connected to the terminal device.

FIG. 23 shows a case in which the first device is a source terminal device, and the source terminal device configures the identifier of each single-hop link. As shown in FIG. 23, the source terminal device may transmit three identifiers ID1, ID2, and ID3 that are associated with subsequent terminal devices to a relay terminal device 1 directly connected to the source terminal device. The relay terminal device 1 may transmit two identifiers ID2 and ID3 that are associated with subsequent terminal devices to a relay terminal device 2 directly connected to the relay terminal device 1. The relay terminal device 2 may transmit one identifier ID3 associated with subsequent terminal devices to a target terminal device directly connected to the relay terminal device 2.

FIG. 24 shows a case in which the first device is a relay terminal device, and the relay terminal device configures the identifier of each single-hop link. As shown in FIG. 24, the first device is a relay terminal device 1. The relay terminal device 1 may transmit one identifier ID1 associated with subsequent terminal devices to a source terminal device directly connected to the relay terminal device 1, and transmit two identifiers ID2 and ID3 that are associated with subsequent terminal devices to a relay terminal device 2 directly connected to the relay terminal device 1. The relay terminal device 2 may transmit one identifier ID3 associated with subsequent terminal devices to a target terminal device directly connected to the relay terminal device 2.

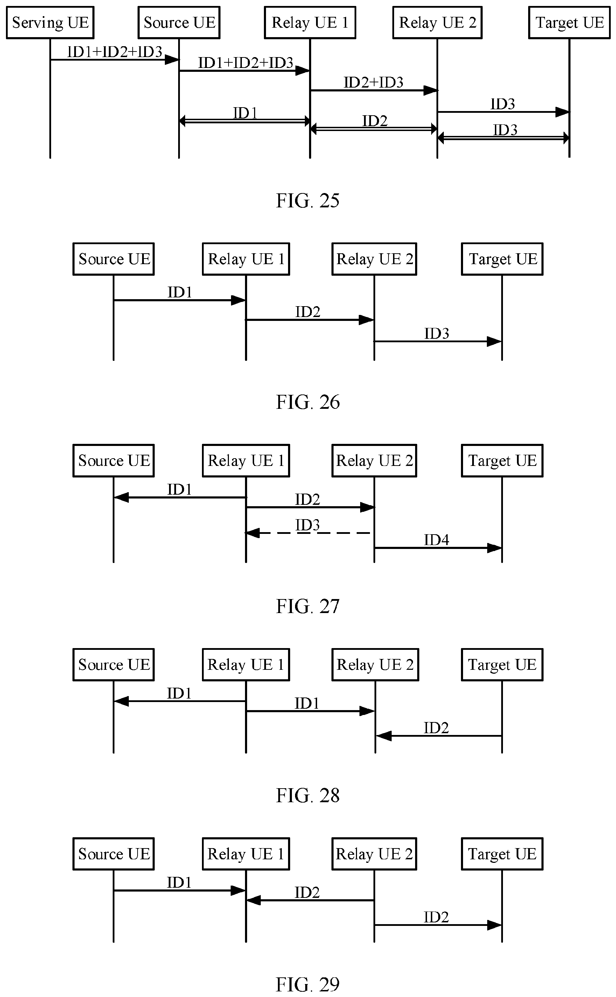

FIG. 25 shows a case in which the first device is a serving terminal device, and the serving terminal device configures the identifier of each single-hop link. As shown in FIG. 25, the first device is a serving terminal device of a source terminal device. The serving terminal device may transmit three identifiers ID1, ID2, and ID3 that are associated with subsequent terminal devices to a source terminal device directly connected to the serving terminal device. The source terminal device may transmit three identifiers ID1, ID2, and ID3 that are associated with subsequent terminal devices to a relay terminal device 1 directly connected to the source terminal device. The relay terminal device 1 may transmit two identifiers ID2 and ID3 that are associated with subsequent terminal devices to a relay terminal device 2 directly connected to the relay terminal device 1. The relay terminal device 2 may transmit one identifier ID3 associated with subsequent terminal devices to a target terminal device directly connected to the relay terminal device 2.

For other solutions that are not described in detail, reference may be made to the descriptions in Embodiment 1, for example, a manner of carrying an identifier, and transmission of assistance information. For brevity, details are not described herein again.

### Embodiment 2.2: Distributed nodes configure the identifier.

That is, identifiers of all single-hop links on the first link may be configured by different devices.

In some embodiments, an identifier of each single-hop link on the first link may be configured by a terminal device associated with the single-hop link.

In some embodiments, a terminal device on the first link may configure an identifier of a single-hop link associated with the terminal device.

In some embodiments, after a terminal device on the first link configures an identifier of a single-hop link associated with the terminal device on the first link, the terminal device may transmit the identifier to another terminal device associated with the single-hop link.

In some embodiments, both an end terminal device and a relay terminal device on the first link participate in configuration of an identifier on the first link. For example, each terminal device on the first link may configure an identifier of one single-hop link on the first link.

In an implementation, the identifier of each single-hop link on the first link may be configured by a terminal device at a starting end of the single-hop link. Referring to FIG. 26, as a terminal device at a starting end of a single-hop link between a source terminal device and a relay terminal device 1, the source terminal device may configure an identifier ID1 of the single-hop link between the source terminal device and the relay terminal device 1, and transmit the identifier ID1 to the relay terminal device 1. As a terminal device at a starting end of a single-hop link between the relay terminal device 1 and a relay terminal device 2, the relay terminal device 1 may configure an identifier ID2 of the single-hop link between the relay terminal device 1 and the relay terminal device 2, and transmit the identifier ID2 to the relay terminal device 2. As a terminal device at a starting end of a single-hop link between the relay terminal device 2 and a target terminal device, the relay terminal device 2 may configure an identifier ID3 of the single-hop link between the relay terminal device 2 and the target terminal device, and transmit the identifier ID3 to the target terminal device.

In some embodiments, a relay terminal device on the first link participates in configuration of an identifier on the first link, and an end terminal device on the first link does not participate in configuration of an identifier on the first link. For example, each relay terminal device on the first link may configure identifiers of two single-hop links associated with the relay terminal device.

In an implementation, referring to FIG. 27, the relay terminal device 1 may configure identifiers ID1 and ID2 of two single-hop links associated with the relay terminal device 1, and transmit the configured identifiers ID1 and ID2 to the source terminal device and the relay terminal device 2, respectively. The relay terminal device 2 may configure identifiers ID3 and ID4 of two single-hop links associated with the relay terminal device 2, and transmit the configured identifiers ID3 and ID4 to the relay terminal device 1 and the target terminal device, respectively.

In some embodiments, two identifiers corresponding to a single-hop link between two relay terminal devices may conflict with each other. For example, referring to FIG. 27, two identifiers ID2 and ID3 may be configured for a single-hop link between the relay terminal device 1 and the relay terminal device 2, resulting in an identifier conflict.

To avoid the foregoing problem, embodiments of this application provide the following solutions.

Solution 1: Only one identifier is used for a single-hop link between two relay terminal devices.

In a possible implementation, the one identifier used by the single-hop link between the two relay terminal devices is configured by one relay terminal device. For example, the one identifier may be configured by the following relay terminal device: a relay terminal device that first transmits an identifier, a relay terminal device that first transmits information for requesting assistance information, a relay terminal device that has a higher terminal device capability, a relay terminal device that is determined by negotiation between two relay terminal devices, a relay terminal device that initiates establishment of a sidelink connection, or the like.

In another possible implementation, the one identifier used by the single-hop link between the two relay terminal devices is configured and then selected by the two relay terminal devices. For example, if one relay terminal device configures a second identifier for the single-hop link, and the other relay terminal device configures a third identifier for the single-hop link, data transmission may be performed on the single-hop link based on a target identifier in the second identifier and the third identifier.

In some embodiments, the target identifier is the identifier with a smaller value in the second identifier and the third identifier.

In some embodiments, the target identifier is the identifier with a larger value in the second identifier and the third identifier.

Solution 2: Two identifiers are used for a single-hop link between two relay terminal devices.

In a possible implementation, the two relay terminal devices may separately configure an identifier for the single-hop link between the two relay terminal devices, and the two configured identifiers may be associated with different data transmission directions. FIG. 27 is used as an example. The relay terminal device 1 configures the identifier ID2 for the single-hop link between the relay terminal device 1 and the relay terminal device 2, and the relay terminal device 2 configures the identifier ID3 for the single-hop link between the relay terminal device 1 and the relay terminal device 2. The relay terminal device 1 may transmit data to the relay termina device 2 by using the identifier ID2 configured by the relay terminal device 1, and the relay terminal device 2 may may transmit data to the relay termina device 1 by using the identifier ID3 configured by the relay terminal device 2.

For other solutions that are not described in detail, reference may be made to the descriptions in Embodiment 1, for example, a manner of carrying an identifier, and transmission of assistance information. For brevity, details are not described herein again.

In some embodiments, the solution in Embodiment 2 may be further extended as: the first identifier is used to identify one terminal device on the first link. In this case, the first link may be determined based on terminal device identities of the terminal devices on the first link.

### Embodiment 3: A first identifier is used to identify a plurality of single-hop links on a first link.

In Embodiment 3, the first identifier may be used to identify the plurality of single-hop links on the first link. For example, the first identifier may be used to identify two single-hop links associated with one relay terminal device on the first link.

In some embodiments, if the first identifier is used to identify two single-hop links associated with one relay terminal device on the first link, the first device that configures the first identifier may be the relay terminal device. For example, the first identifier is used to identify two single-hop links associated with a first relay terminal device on the first link. In this case, the first device is the first relay terminal device.

In some embodiments, after a relay terminal device configures identifiers of two single-hop links associated with the relay terminal device, the relay terminal device may transmit the configured identifiers to another terminal device (for example, an end terminal device or a relay terminal device) associated with the two single-hop links.

In some embodiments, some relay terminal devices and some end terminal devices on the first link participate in configuration of an identifier associated with the first link.

In a possible implementation, referring to FIG. 28, a relay terminal device 1 and a target terminal device on a first link participate in configuration of an identifier associated with the first link, and a source terminal device and a relay terminal device 2 do not participate in the configuration of the identifier associated with the first link. The relay terminal device 1 may configure identifiers of two single-hop links associated with the relay terminal device 1, and the identifiers of the two single-hop links are the same (both are ID1). The target terminal device may configure an identifier (ID2) of one single-hop link associated with the target terminal device.

In another possible implementation, referring to FIG. 29, a source terminal device and a relay terminal device 2 may participate in configuration of an identifier associated with a first link, and a relay terminal device 1 and an end terminal device may not participate in the configuration of the identifier associated with the first link.

In some embodiments, some or all of relay terminal devices on the first link participate in the configuration of the identifier associated with the first link. For example, only some relay terminal devices on the first link participate in the configuration of the identifier associated with the first link, and an end terminal device does not participate in the configuration of the identifier associated with the first link. Alternatively, all relay terminal devices on the first link participate in the configuration of the identifier associated with the first link, and an end terminal device does not participate in the configuration of the identifier associated with the first link.

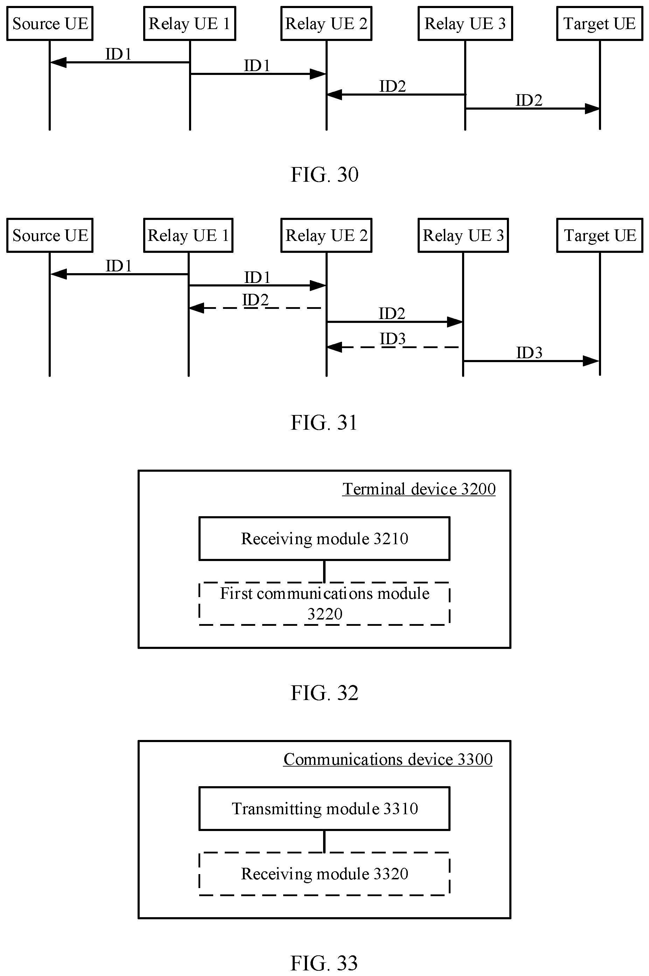

In a possible implementation, referring to FIG. 30, a relay terminal device 1 and a relay terminal device 3 on a first link participate in configuration of an identifier associated with the first link. The relay terminal device 1 may configure identifiers of two single-hop links associated with the relay terminal device 1, and the identifiers of the two single-hop links are the same (both are ID1). The relay terminal device 3 may configure identifiers of two single-hop links associated with the relay terminal device 3, and the identifiers of the two single-hop links are the same (both are ID2).

In another possible implementation, referring to FIG. 31, a relay terminal device 1, a relay terminal device 2, and a relay terminal device 3 on a first link all participate in configuration of an identifier associated with the first link. The relay terminal device 1 may configure identifiers of two single-hop links associated with the relay terminal device 1, and the identifiers of the two single-hop links are the same (both are ID1). The relay terminal device 2 may configure identifiers of two single-hop links associated with the relay terminal device 3, and the identifiers of the two single-hop links are the same (both are ID2). The relay terminal device 3 may configure identifiers of two single-hop links associated with the relay terminal device 3, and the identifiers of the two single-hop links are the same (both are ID3). In this case, two identifiers may be configured for a single-hop link between the relay terminal device 1 and the relay terminal device 2, and two identifiers may also be configured for a single-hop link between the relay terminal device 2 and the relay terminal device 3, resulting in an identifier conflict. For related descriptions of how to resolve the identifier conflict, reference may be made to the foregoing descriptions. For brevity, details are not described herein again.

In still another possible implementation, the relay terminal device 1 in FIG. 28 may configure the identifiers of the two single-hop links associated with the relay terminal device 1, where the identifiers of the two single-hop links are the same (both are ID1), and the relay terminal device 2 may configure identifiers (both are ID2) of two single-hop links associated with the relay terminal device 2. In this case, two identifiers may be configured for a single-hop link between the relay terminal device 1 and the relay terminal device 2, resulting in an identifier conflict. For related descriptions of how to resolve the identifier conflict, reference may be made to the foregoing descriptions. For brevity, details are not described herein again.

For other solutions that are not described in detail, reference may be made to the descriptions in Embodiment 1, for example, a manner of carrying an identifier, and transmission of assistance information. For brevity, details are not described herein again.

In some embodiments, the solution in Embodiment 3 may be further extended as: the first identifier is used to identify one terminal device on the first link. In this case, the first link may be determined based on terminal device identities of the terminal devices on the first link.

The foregoing describes the method embodiments of this application in detail with reference to FIG. 1 to FIG. 31, and the following describes apparatus embodiments of this application in detail with reference to FIG. 32 to FIG. 34. It should be understood that the descriptions of the method embodiment correspond to the descriptions of the apparatus embodiment. Therefore, for a part that is not described in detail, reference may be made to the foregoing method embodiments.

FIG. 32 is a schematic structural diagram of a terminal device according to an embodiment of this application. The terminal device 3200 shown in FIG. 32 may include a receiving module 3210.

The receiving module 3210 may be configured to receive a first identifier configured by a first device, where the first identifier is used to transmit data on a first link, the first link is a sidelink, and the first link passes through a plurality of relay terminal devices.

Optionally, the first identifier is used to identify one of the following: the first link; one single-hop link on the first link; a plurality of single-hop links on the first link; or one terminal device on the first link.

Optionally, the first identifier includes a terminal device identity of one end terminal device on the first link, and the first link is determined based on terminal device identities of two end terminal devices on the first link.

Optionally, the first device includes one of the following: an end terminal device on the first link; a target relay terminal device on the first link; or an external device of the first link.

Optionally, the target relay terminal device is determined based on one or more of the following: a quantity of relay hops between a relay terminal device and an end terminal device on the first link; first indication information transmitted by an upper layer; a terminal device capability of a relay terminal device on the first link; whether a relay terminal device on the first link is located within coverage of a network device; or a position of a relay terminal device on the first link.

Optionally, the target relay terminal device includes one or more of the following: a relay terminal device with a minimum quantity of relay hops away from an end terminal device on the first link; a terminal device indicated by first indication information transmitted by an upper layer; a relay terminal device located within coverage of a network device on the first link; or a relay terminal device located in a center of the first link.

Optionally, the external device includes one of the following: a serving terminal device of a terminal device on the first link; or a network device.

Optionally, the first identifier is used to identify a first single-hop link on the first link, the first single-hop link is associated with the first terminal device and a second terminal device, and the first device is the second terminal device; or the first identifier includes a terminal device identity of one terminal device on the first link, and the first link is determined based on terminal device identities of terminal devices on the first link.

Optionally, the first link includes N single-hop links, each single-hop link in the N single-hop links corresponds to one identifier, the identifier corresponding to each single-hop link is configured by one terminal device associated with the single-hop link, and N is a positive integer greater than or equal to 2.

Optionally, the first link includes M relay terminal devices, each relay terminal device in the M relay terminal devices is associated with two single-hop links on the first link, each relay terminal device is configured to configure identifiers for the two single-hop links associated with each relay terminal device, and M is a positive integer greater than or equal to 2.

Optionally, the first single-hop link is located between a first relay terminal device and a second relay terminal device on the first link, the first relay terminal device configures a second identifier for the first single-hop link, the second relay terminal device configures a third identifier for the first single-hop link, the second identifier is associated with a first transmission direction of the first single-hop link, and the third identifier is associated with a second transmission direction of the first single-hop link.

Optionally, the first single-hop link is located between a first relay terminal device and a second relay terminal device on the first link, the first relay terminal device configures a second identifier for the first single-hop link, and the second relay terminal device configures a third identifier for the first single-hop link. For the first relay terminal device, data transmission is performed on the first single-hop link based on the second identifier and a mapping relationship between the second identifier and the third identifier. For the second relay terminal device, data transmission is performed on the first single-hop link based on the third identifier and the mapping relationship between the second identifier and the third identifier.

Optionally, the first single-hop link is located between a first relay terminal device and a second relay terminal device on the first link, and data transmission is performed on the first single-hop link based on an identifier configured by the first relay terminal device.

Optionally, a time at which the first relay terminal device transmits an identifier of the first single-hop link is earlier than a time at which the second relay terminal device transmits an identifier of the first single-hop link; or a time at which the first relay terminal device transmits assistance information is earlier than a time at which the second relay terminal device transmits assistance information, where the assistance information is used to determine an identifier corresponding to the first single-hop link; or a terminal device capability of the first relay terminal device is higher than a terminal device capability of the second relay terminal device; or the first relay terminal device negotiates with the second relay terminal device to determine that the first relay terminal device configures an identifier of the first single-hop link; or a connection establishment request used to establish the first single-hop link is initiated by the first relay terminal device.

Optionally, the first single-hop link is located between a first relay terminal device and a second relay terminal device on the first link, the first relay terminal device configures a second identifier for the first single-hop link, the second relay terminal device configures a third identifier for the first single-hop link, and data transmission is performed on the first single-hop link based on a target identifier in the second identifier and the third identifier.

Optionally, the target identifier is the identifier with a smaller value in the second identifier and the third identifier; or the target identifier is the identifier with a larger value in the second identifier and the third identifier.

Optionally, the first identifier is used to identify two single-hop links associated with a first relay terminal device on the first link, and the first device is the first relay terminal device; or the first identifier includes a terminal device identity of one terminal device on the first link, and the first link is determined based on terminal device identities of terminal devices on the first link.

Optionally, the first identifier is carried by a first message, and the first message is a PC5-RRC message or a PC5-S message.

Optionally, the first message is a PC5-RRC message, the first message includes configuration information of an SRAP layer, and the configuration information includes the first identifier.

Optionally, the terminal device further includes a first communications module 3220, configured to transmit or receive signalling on the first link based on a fourth identifier, where the fourth identifier includes one of the following: a default identifier; an identifier determined based on protocol pre-defined information; or an identifier determined based on a first mapping relationship.

Optionally, the first mapping relationship includes one or more of the following: a mapping relationship between a service and the fourth identifier; a mapping relationship between a service identifier and the fourth identifier; a mapping relationship between a relay service code and the fourth identifier; or a mapping relationship between a layer 2 identity of a terminal device and the fourth identifier.

Optionally, the terminal device further includes a transmitting module, configured to transmit first assistance information to the first device, where the first assistance information is used to determine the first identifier.

Optionally, the transmission of the first assistance information is triggered based on a first condition, and the first condition includes one or more of the following: the first terminal device receives information for requesting assistance information; the first terminal device receives a data packet that includes a new identifier or an unknown identifier; the first terminal device establishes a new sidelink based on a relay terminal device; configured identities of the first terminal device conflict with each other; or the first terminal device receives second assistance information transmitted by another terminal device, where the second assistance information is used to determine an identifier associated with the first link.

Optionally, the first assistance information includes one or more of the following: a configured identity of the first terminal device; a position of the first terminal device on the first link; a layer 2 identity of the first terminal device; a layer 2 identity of a previous-hop terminal device of the first terminal device; a layer 2 identity of a next-hop terminal device of the first terminal device; or information indicating that the first terminal device is a relay terminal device or an end terminal device.

Optionally, the first assistance information is directly transmitted by the first terminal device to the first device; or the first assistance information is transmitted by the first terminal device to the first device through a second terminal device, where the second terminal device is connected with the first terminal device via a single-hop link.

Optionally, the first identifier is directly transmitted by the first device to the first terminal device; or the first identifier is transmitted by the first device to the first terminal device through a second terminal device, where the second terminal device is connected with the first terminal device via a single-hop link.

Optionally, the terminal device further includes a second communications module, configured to transmit or receive a first data packet, where the first data packet is a data packet of an SRAP layer, and the first data packet includes the first identifier.

Optionally, the first terminal device is associated with a second single-hop link and a third single-hop link, the first identifier is used to identify the second single-hop link, and the first data packet is a data packet transmitted by using the second single-hop link. The terminal device further includes: a forwarding module, configured to: after the first terminal device replaces the first identifier with a fifth identifier, forward the first data packet by using the third single-hop link, where the fifth identifier is used to identify the third single-hop link.

FIG. 33 is a schematic structural diagram of a communications device according to an embodiment of this application. The communications device 3300 shown in FIG. 33 may be any one of the foregoing first devices. The communications device 3300 may include a transmitting module 3310.

The transmitting module 3310 may be configured to transmit a first identifier configured by the first device to a first terminal device, where the first identifier is used to transmit data on a first link, the first link is a sidelink, and the first link passes through a plurality of relay terminal devices.

Optionally, the first identifier is used to identify one of the following: the first link; one single-hop link on the first link; a plurality of single-hop links on the first link; or one terminal device on the first link.

Optionally, the first identifier includes a terminal device identity of one end terminal device on the first link, and the first link is determined based on terminal device identities of two end terminal devices on the first link.

Optionally, the first device includes one of the following: an end terminal device on the first link; a target relay terminal device on the first link; or an external device of the first link.

Optionally, the target relay terminal device is determined based on one or more of the following: a quantity of relay hops between a relay terminal device and an end terminal device on the first link; first indication information transmitted by an upper layer; a terminal device capability of a relay terminal device on the first link; whether a relay terminal device on the first link is located within coverage of a network device; or a position of a relay terminal device on the first link.

Optionally, the target relay terminal device includes one or more of the following: a relay terminal device with a minimum quantity of relay hops away from an end terminal device on the first link; a terminal device indicated by first indication information transmitted by an upper layer; a relay terminal device located within coverage of a network device on the first link; or a relay terminal device located in a center of the first link.

Optionally, the external device includes one of the following: a serving terminal device of a terminal device on the first link; or a network device.

Optionally, the first identifier is used to identify a first single-hop link on the first link, the first single-hop link is associated with the first terminal device and a second terminal device, and the first device is the second terminal device; or the first identifier includes a terminal device identity of one terminal device on the first link, and the first link is determined based on terminal device identities of terminal devices on the first link.

Optionally, the first link includes N single-hop links, each single-hop link in the N single-hop links corresponds to one identifier, the identifier corresponding to each single-hop link is configured by one terminal device associated with the single-hop link, and N is a positive integer greater than or equal to 2.

Optionally, the first link includes M relay terminal devices, each relay terminal device in the M relay terminal devices is associated with two single-hop links on the first link, each relay terminal device is configured to configure identifiers for the two single-hop links associated with the relay terminal device, and M is a positive integer greater than or equal to 2.

Optionally, the first single-hop link is located between a first relay terminal device and a second relay terminal device on the first link, the first relay terminal device configures a second identifier for the first single-hop link, the second relay terminal device configures a third identifier for the first single-hop link, the second identifier is associated with a first transmission direction of the first single-hop link, and the third identifier is associated with a second transmission direction of the first single-hop link.

Optionally, the first single-hop link is located between a first relay terminal device and a second relay terminal device on the first link, the first relay terminal device configures a second identifier for the first single-hop link, and the second relay terminal device configures a third identifier for the first single-hop link. For the first relay terminal device, data transmission is performed on the first single-hop link based on the second identifier and a mapping relationship between the second identifier and the third identifier. For the second relay terminal device, data transmission is performed on the first single-hop link based on the third identifier and the mapping relationship between the second identifier and the third identifier.

Optionally, the first single-hop link is located between a first relay terminal device and a second relay terminal device on the first link, and data transmission is performed on the first single-hop link based on an identifier configured by the first relay terminal device.

Optionally, a time at which the first relay terminal device transmits an identifier of the first single-hop link is earlier than a time at which the second relay terminal device transmits an identifier of the first single-hop link; or a time at which the first relay terminal device transmits assistance information is earlier than a time at which the second relay terminal device transmits assistance information, where the assistance information is used to determine an identifier corresponding to the first single-hop link; or a terminal device capability of the first relay terminal device is higher than a terminal device capability of the second relay terminal device; or the first relay terminal device negotiates with the second relay terminal device to determine that the first relay terminal device configures an identifier of the first single-hop link; or a connection establishment request used to establish the first single-hop link is initiated by the first relay terminal device.

Optionally, the first single-hop link is located between a first relay terminal device and a second relay terminal device on the first link, the first relay terminal device configures a second identifier for the first single-hop link, the second relay terminal device configures a third identifier for the first single-hop link, and data transmission is performed on the first single-hop link based on a target identifier in the second identifier and the third identifier.

Optionally, the target identifier is the identifier with a smaller value in the second identifier and the third identifier; or the target identifier is the identifier with a larger value in the second identifier and the third identifier.

Optionally, the first identifier is used to identify two single-hop links associated with a first relay terminal device on the first link, and the first device is the first relay terminal device.

Alternatively, the first identifier includes a terminal device identity of one terminal device on the first link, and the first link is determined based on terminal device identities of terminal devices on the first link.

Optionally, the first identifier is carried by a first message, and the first message is a PC5-RRC message or a PC5-S message.

Optionally, the first message is a PC5-RRC message, the first message includes configuration information of an SRAP layer, and the configuration information includes the first identifier.

Optionally, before the first device transmits the first identifier configured by the first device to the first terminal device, signalling is transmitted or received on the first link based on a fourth identifier, where the fourth identifier includes one of the following: a default identifier; an identifier determined based on protocol pre-defined information; or an identifier determined based on a first mapping relationship.

Optionally, the first mapping relationship includes one or more of the following: a mapping relationship between a service and the fourth identifier; a mapping relationship between a service identifier and the fourth identifier; a mapping relationship between a relay service code and the fourth identifier; or a mapping relationship between a layer 2 identity of a terminal device and the fourth identifier.

Optionally, the communications device further includes a receiving module 3320, configured to receive first assistance information transmitted by the first terminal device, where the first assistance information is used to determine the first identifier.

Optionally, the transmission of the first assistance information is triggered based on a first condition, and the first condition includes one or more of the following: the first terminal device receives information for requesting assistance information; the first terminal device receives a data packet that includes a new identifier or an unknown identifier; the first terminal device establishes a new sidelink based on a relay terminal device; configured identities of the first terminal device conflict with each other; or the first terminal device receives second assistance information transmitted by another terminal device, where the second assistance information is used to determine an identifier associated with the first link.

Optionally, the first assistance information includes one or more of the following: a configured identity of the first terminal device; a position of the first terminal device on the first link; a layer 2 identity of the first terminal device; a layer 2 identity of a previous-hop terminal device of the first terminal device; a layer 2 identity of a next-hop terminal device of the first terminal device; or information indicating that the first terminal device is a relay terminal device or an end terminal device.

Optionally, the first assistance information is directly transmitted by the first terminal device to the first device; or the first assistance information is transmitted by the first terminal device to the first device through a second terminal device, where the second terminal device is connected with the first terminal device via a single-hop link.

Optionally, the first identifier is directly transmitted by the first device to the first terminal device; or the first identifier is transmitted by the first device to the first terminal device through a second terminal device, where the second terminal device is connected with the first terminal device through a single-hop link.

Optionally, the first identifier is configured after the first device receives assistance information transmitted by terminal devices on the first link, where the first device is an external device of the first link; or the first identifier is configured after the first device receives assistance information transmitted by terminal devices except the first device on the first link, where the first device is a terminal device on the first link; or the first identifier is configured after the first device receives assistance information transmitted by at least one terminal device on the first link; or the first identifier is configured after a time following transmission of request information reaches a first duration, where the request information is used to request assistance information; or the first identifier is configured after a time following establishment of a connection of the first link reaches a second duration; or configuration of the first identifier is not related to whether assistance information is received, where the assistance information is used to determine an identifier associated with the first link.

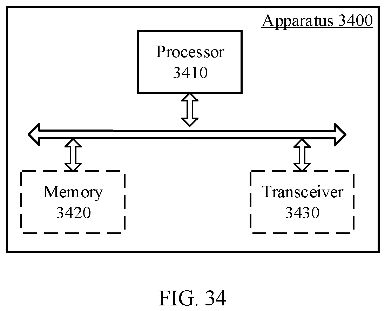

FIG. 34 is a schematic structural diagram of a communications apparatus according to an embodiment of this application. A dashed line in FIG. 34 indicates that the unit or module is optional. The apparatus 3400 may be configured to implement the method described in the foregoing method embodiments. The apparatus 3400 may be a chip, a terminal device, or a network device.

The apparatus 3400 may include one or more processors 3410. The processor 3410 may support the apparatus 3400 to implement the method described in the foregoing method embodiments. The processor 3410 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 3400 may further include one or more memories 3420. The memory 3420 stores a program, and the program may be executed by the processor 3410, so that the processor 3410 executes the method described in the foregoing method embodiments. The memory 3420 may be separate from the processor 3410 or may be integrated into the processor 3410.

The apparatus 3400 may further include a transceiver 3430. The processor 3410 may communicate with another device or chip by using the transceiver 3430. For example, the processor 3410 may transmit data to and receive data from another device or chip through the transceiver 3430.

An embodiment of this application further provides a computer-readable storage medium, configured to store a program. The computer-readable storage medium may be applied to the terminal device or the network device provided in embodiments of this application, and the program causes a computer to execute the method executed by the terminal device or the network device in various embodiments of this application.

An embodiment of this application further provides a computer program product. The computer program product includes a program. The computer program product may be applied to the terminal device or the network device provided in embodiments of this application, and the program causes a computer to execute the method executed by the terminal device or the network device in various embodiments of this application.

An embodiment of this application further provides a computer program. The computer program may be applied to the terminal device or the network device provided in embodiments of this application, and the computer program causes the computer to execute the method executed by the terminal device or the network device in embodiments of this application.

It should be understood that the terms "system" and "network" in this application may be used interchangeably. In addition, the terms used in this application are only used to illustrate specific embodiments of this application, but are not intended to limit this application. The terms "first", "second", "third", "fourth", and the like in the specification, claims, and drawings of this application are used for distinguishing different objects from each other, rather than defining a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "corresponding" may mean that there is a direct or indirect correspondence between two elements, or that there is an association relationship between two elements, or that there is a relationship of "indicating" and "being indicated", "configuring" and "being configured", or the like.

In embodiments of this application, the mentioned "include" may be directly included, or indirectly included. Optionally, "include" mentioned in embodiments of this application may be replaced with "indicate" or "used for determining". For example, A includes B, which may be replaced with A to indicate B, or A is used to determine B.

In embodiments of this application, "pre-defined" or "pre-configured" may be implemented by pre-storing corresponding code or a corresponding table in a device (for example, including a terminal device and a network device) or in other manners that can be used for indicating related information, and a specific implementation thereof is not limited in this application. For example, being pre-defined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined based on functions and internal logic of the processes, and should not be construed as any limitation on the implementation processes of embodiments of this application.

In several embodiments provided in this application, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between apparatuses or units may be implemented in electrical, mechanical, or other forms.

The units described as separate components may be or may not be physically separated, and the components displayed as units may be or may not be physical units, that is, may be located in one place or distributed on a plurality of network units. Some or all of the units may be selected according to actual requirements to achieve the objective of the solutions of embodiments.

In addition, functional units in embodiments of this application may be integrated into one processing unit, or each of the units may exist alone physically, or two or more units may be integrated into one unit.

Some or all of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions in embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, radio, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
receiving, by a first terminal device, a first identifier configured by a first device, wherein the first identifier is used to transmit data on a first link,
wherein the first link is a sidelink, and the first link passes through a plurality of relay terminal devices.

2. The method according to claim 1, wherein the first identifier is used to identify one of following:
the first link;
one single-hop link on the first link;
a plurality of single-hop links on the first link; or
one terminal device on the first link.

3. The method according to claim 2, wherein the first identifier comprises a terminal device identity of one end terminal device on the first link, and the first link is determined based on terminal device identities of two end terminal devices on the first link.

4. The method according to any one of claims 1 to 3, wherein the first device comprises one of following:
an end terminal device on the first link;
a target relay terminal device on the first link; or
an external device of the first link.

5. The method according to claim 4, wherein the target relay terminal device is determined based on one or more of following:
a quantity of relay hops between a relay terminal device and an end terminal device on the first link;
first indication information transmitted by an upper layer;
a terminal device capability of a relay terminal device on the first link;
whether a relay terminal device on the first link is located within coverage of a network device; or
a position of a relay terminal device on the first link.

6. The method according to claim 4 or 5, wherein the target relay terminal device is one or more of following:
a relay terminal device with a minimum quantity of relay hops away from an end terminal device on the first link;
a terminal device indicated by first indication information transmitted by an upper layer;
a relay terminal device located within coverage of a network device on the first link; or
a relay terminal device located in a center of the first link.

7. The method according to any one of claims 4 to 6, wherein the external device comprises one of following:
a serving terminal device of a terminal device on the first link; or
a network device.

8. The method according to any one of claims 1 to 3, wherein the first identifier is used to identify a first single-hop link on the first link, the first single-hop link is associated with the first terminal device and a second terminal device, and the first device is the second terminal device; or
the first identifier comprises a terminal device identity of one terminal device on the first link, and the first link is determined based on terminal device identities of terminal devices on the first link.

9. The method according to claim 8, wherein the first link comprises N single-hop links, each single-hop link in the N single-hop links corresponds to one identifier, the identifier corresponding to each single-hop link is configured by one terminal device associated with the single-hop link, and N is a positive integer greater than or equal to 2.

10. The method according to claim 8, wherein the first link comprises M relay terminal devices, each relay terminal device in the M relay terminal devices is associated with two single-hop links on the first link, each relay terminal device is configured to configure identifiers for the two single-hop links associated with the relay terminal device, and M is a positive integer greater than or equal to 2.

11. The method according to claim 10, wherein the first single-hop link is located between a first relay terminal device and a second relay terminal device on the first link, the first relay terminal device configures a second identifier for the first single-hop link, the second relay terminal device configures a third identifier for the first single-hop link, the second identifier is associated with a first transmission direction of the first single-hop link, and the third identifier is associated with a second transmission direction of the first single-hop link.

12. The method according to claim 10, wherein the first single-hop link is located between a first relay terminal device and a second relay terminal device on the first link, the first relay terminal device configures a second identifier for the first single-hop link, and the second relay terminal device configures a third identifier for the first single-hop link;
for the first relay terminal device, data transmission is performed on the first single-hop link based on the second identifier and a mapping relationship between the second identifier and the third identifier; and
for the second relay terminal device, data transmission is performed on the first single-hop link based on the third identifier and the mapping relationship between the second identifier and the third identifier.

13. The method according to claim 10, wherein the first single-hop link is located between a first relay terminal device and a second relay terminal device on the first link, and data transmission is performed on the first single-hop link based on an identifier configured by the first relay terminal device.

14. The method according to claim 13, wherein
a time at which the first relay terminal device transmits an identifier of the first single-hop link is earlier than a time at which the second relay terminal device transmits an identifier of the first single-hop link; or
a time at which the first relay terminal device transmits assistance information is earlier than a time at which the second relay terminal device transmits assistance information, wherein the assistance information is used to determine an identifier corresponding to the first single-hop link; or
a terminal device capability of the first relay terminal device is higher than a terminal device capability of the second relay terminal device; or
the first relay terminal device negotiates with the second relay terminal device to determine that the first relay terminal device configures an identifier of the first single-hop link; or
a connection establishment request used to establish the first single-hop link is initiated by the first relay terminal device.

15. The method according to claim 10, wherein the first single-hop link is located between a first relay terminal device and a second relay terminal device on the first link, the first relay terminal device configures a second identifier for the first single-hop link, the second relay terminal device configures a third identifier for the first single-hop link, and data transmission is performed on the first single-hop link based on a target identifier in the second identifier and the third identifier.

16. The method according to claim 15, wherein
the target identifier is the identifier with a smaller value in the second identifier and the third identifier; or
the target identifier is the identifier with a larger value in the second identifier and the third identifier.

17. The method according to any one of claims 1 to 3, wherein the first identifier is used to identify two single-hop links associated with a first relay terminal device on the first link, and the first device is the first relay terminal device; or
the first identifier comprises a terminal device identity of one terminal device on the first link, and the first link is determined based on terminal device identities of terminal devices on the first link.

18. The method according to any one of claims 1 to 17, wherein the first identifier is carried by a first message, and the first message is a PC5-RRC message or a PC5-S message.

19. The method according to claim 18, wherein the first message is a PC5-RRC message, the first message comprises configuration information of an SRAP layer, and the configuration information comprises the first identifier.

20. The method according to any one of claims 1 to 19, wherein before the receiving, by the first terminal device, the first identifier configured by the first device, the method further comprises:
transmitting or receiving, by the first terminal device, signalling on the first link based on a fourth identifier,
wherein the fourth identifier comprises one of following:
a default identifier;
an identifier determined based on protocol pre-defined information; or
an identifier determined based on a first mapping relationship.

21. The method according to claim 20, wherein the first mapping relationship comprises one or more of following:
a mapping relationship between a service and the fourth identifier;
a mapping relationship between a service identifier and the fourth identifier;
a mapping relationship between a relay service code and the fourth identifier; or
a mapping relationship between a layer 2 identity of a terminal device and the fourth identifier.

22. The method according to any one of claims 1 to 21, wherein before the receiving, by the first terminal device, the first identifier configured by the first device, the method further comprises:
transmitting, by the first terminal device, first assistance information to the first device, wherein the first assistance information is used to determine the first identifier.

23. The method according to claim 22, wherein the transmission of the first assistance information is triggered based on a first condition, and the first condition comprises one or more of following:
the first terminal device receives information for requesting assistance information;
the first terminal device receives a data packet that comprises a new identifier or an unknown identifier;
the first terminal device establishes a new sidelink based on a relay terminal device;
configured identities of the first terminal device conflict with each other; or
the first terminal device receives second assistance information transmitted by another terminal device, wherein the second assistance information is used to determine an identifier associated with the first link.

24. The method according to claim 22 or 23, wherein the first assistance information comprises one or more of following:
a configured identity of the first terminal device;
a position of the first terminal device on the first link;
a layer 2 identity of the first terminal device;
a layer 2 identity of a previous-hop terminal device of the first terminal device;
a layer 2 identity of a next-hop terminal device of the first terminal device; or
information indicating that the first terminal device is a relay terminal device or an end terminal device.

25. The method according to any one of claims 22 to 24, wherein
the first assistance information is directly transmitted by the first terminal device to the first device; or
the first assistance information is transmitted by the first terminal device to the first device through a second terminal device,
wherein the second terminal device is connected with the first terminal device via a single-hop link.

26. The method according to any one of claims 1 to 25, wherein
the first identifier is directly transmitted by the first device to the first terminal device; or
the first identifier is transmitted by the first device to the first terminal device through a second terminal device,
wherein the second terminal device is connected with the first terminal device via a single-hop link.

27. The method according to any one of claims 1 to 26, wherein the method further comprises:
transmitting or receiving, by the first terminal device, a first data packet, wherein the first data packet is a data packet of an SRAP layer, and the first data packet comprises the first identifier.

28. The method according to claim 27, wherein the first terminal device is associated with a second single-hop link and a third single-hop link, the first identifier is used to identify the second single-hop link, and the first data packet is a data packet transmitted by using the second single-hop link;
wherein the method further comprises:
after the first terminal device replaces the first identifier with a fifth identifier, forwarding, by the first terminal device, the first data packet by using the third single-hop link, wherein the fifth identifier is used to identify the third single-hop link.

29. A wireless communication method, comprising:
transmitting, by a first device, a first identifier configured by the first device to a first terminal device, wherein the first identifier is used to transmit data on a first link, the first link is a sidelink, and the first link passes through a plurality of relay terminal devices.

30. The method according to claim 29, wherein the first identifier is used to identify one of following:
the first link;
one single-hop link on the first link;
a plurality of single-hop links on the first link; or
one terminal device on the first link.

31. The method according to claim 30, wherein the first identifier comprises a terminal device identity of one end terminal device on the first link, and the first link is determined based on terminal device identities of two end terminal devices on the first link.

32. The method according to any one of claims 29 to 31, wherein the first device comprises one of following:
an end terminal device on the first link;
a target relay terminal device on the first link; or
an external device of the first link.

33. The method according to claim 32, wherein the target relay terminal device is determined based on one or more of following:
a quantity of relay hops between a relay terminal device and an end terminal device on the first link;
first indication information transmitted by an upper layer;
a terminal device capability of a relay terminal device on the first link;
whether a relay terminal device on the first link is located within coverage of a network device; or
a position of a relay terminal device on the first link.

34. The method according to claim 32 or 33, wherein the target relay terminal device is one or more of following:
a relay terminal device with a minimum quantity of relay hops away from an end terminal device on the first link;
a terminal device indicated by first indication information transmitted by an upper layer;
a relay terminal device located within coverage of a network device on the first link; or
a relay terminal device located in a center of the first link.

35. The method according to any one of claims 32 to 34, wherein the external device comprises one of following:
a serving terminal device of a terminal device on the first link; or
a network device.

36. The method according to any one of claims 29 to 31, wherein the first identifier is used to identify a first single-hop link on the first link, the first single-hop link is associated with the first terminal device and a second terminal device, and the first device is the second terminal device; or
the first identifier comprises a terminal device identity of one terminal device on the first link, and the first link is determined based on terminal device identities of terminal devices on the first link.

37. The method according to claim 36, wherein the first link comprises N single-hop links, each single-hop link in the N single-hop links corresponds to one identifier, the identifier corresponding to each single-hop link is configured by one terminal device associated with the single-hop link, and N is a positive integer greater than or equal to 2.

38. The method according to claim 36, wherein the first link comprises M relay terminal devices, each relay terminal device in the M relay terminal devices is associated with two single-hop links on the first link, each relay terminal device is configured to configure identifiers for the two single-hop links associated with the relay terminal device, and M is a positive integer greater than or equal to 2.

39. The method according to claim 38, wherein the first single-hop link is located between a first relay terminal device and a second relay terminal device on the first link, the first relay terminal device configures a second identifier for the first single-hop link, the second relay terminal device configures a third identifier for the first single-hop link, the second identifier is associated with a first transmission direction of the first single-hop link, and the third identifier is associated with a second transmission direction of the first single-hop link.

40. The method according to claim 38, wherein the first single-hop link is located between a first relay terminal device and a second relay terminal device on the first link, the first relay terminal device configures a second identifier for the first single-hop link, and the second relay terminal device configures a third identifier for the first single-hop link;
for the first relay terminal device, data transmission is performed on the first single-hop link based on the second identifier and a mapping relationship between the second identifier and the third identifier; and
for the second relay terminal device, data transmission is performed on the first single-hop link based on the third identifier and the mapping relationship between the second identifier and the third identifier.

41. The method according to claim 38, wherein the first single-hop link is located between a first relay terminal device and a second relay terminal device on the first link, and data transmission is performed on the first single-hop link based on an identifier configured by the first relay terminal device.

42. The method according to claim 41, wherein
a time at which the first relay terminal device transmits an identifier of the first single-hop link is earlier than a time at which the second relay terminal device transmits an identifier of the first single-hop link; or
a time at which the first relay terminal device transmits assistance information is earlier than a time at which the second relay terminal device transmits assistance information, wherein the assistance information is used to determine an identifier corresponding to the first single-hop link; or
a terminal device capability of the first relay terminal device is higher than a terminal device capability of the second relay terminal device; or
the first relay terminal device negotiates with the second relay terminal device to determine that the first relay terminal device configures an identifier of the first single-hop link; or
a connection establishment request used to establish the first single-hop link is initiated by the first relay terminal device.

43. The method according to claim 38, wherein the first single-hop link is located between a first relay terminal device and a second relay terminal device on the first link, the first relay terminal device configures a second identifier for the first single-hop link, the second relay terminal device configures a third identifier for the first single-hop link, and data transmission is performed on the first single-hop link based on a target identifier in the second identifier and the third identifier.

44. The method according to claim 43, wherein
the target identifier is the identifier with a smaller value in the second identifier and the third identifier; or
the target identifier is the identifier with a larger value in the second identifier and the third identifier.

45. The method according to any one of claims 29 to 31, wherein the first identifier is used to identify two single-hop links associated with a first relay terminal device on the first link, and the first device is the first relay terminal device; or
the first identifier comprises a terminal device identity of one terminal device on the first link, and the first link is determined based on terminal device identities of terminal devices on the first link.

46. The method according to any one of claims 29 to 45, wherein the first identifier is carried by a first message, and the first message is a PC5-RRC message or a PC5-S message.

47. The method according to claim 46, wherein the first message is a PC5-RRC message, the first message comprises configuration information of an SRAP layer, and the configuration information comprises the first identifier.

48. The method according to any one of claims 29 to 47, wherein before the transmitting, by the first device, the first identifier configured by the first device to the first terminal device, signalling is transmitted or received on the first link based on a fourth identifier, wherein the fourth identifier comprises one of following:
a default identifier;
an identifier determined based on protocol pre-defined information; or
an identifier determined based on a first mapping relationship.

49. The method according to claim 48, wherein the first mapping relationship comprises one or more of following:
a mapping relationship between a service and the fourth identifier;
a mapping relationship between a service identifier and the fourth identifier;
a mapping relationship between a relay service code and the fourth identifier; or
a mapping relationship between a layer 2 identity of a terminal device and the fourth identifier.

50. The method according to any one of claims 29 to 49, wherein before the transmitting, by the first device, the first identifier configured by the first device to the first terminal device, the method further comprises:
receiving, by the first device, first assistance information transmitted by the first terminal device, wherein the first assistance information is used to determine the first identifier.

51. The method according to claim 50, wherein the transmission of the first assistance information is triggered based on a first condition, and the first condition comprises one or more of following:
the first terminal device receives information for requesting assistance information;
the first terminal device receives a data packet that comprises a new identifier or an unknown identifier;
the first terminal device establishes a new sidelink based on a relay terminal device;
configured identities of the first terminal device conflict with each other; or
the first terminal device receives second assistance information transmitted by another terminal device, wherein the second assistance information is used to determine an identifier associated with the first link.

52. The method according to claim 50 or 51, wherein the first assistance information comprises one or more of following:
a configured identity of the first terminal device;
a position of the first terminal device on the first link;
a layer 2 identity of the first terminal device;
a layer 2 identity of a previous-hop terminal device of the first terminal device;
a layer 2 identity of a next-hop terminal device of the first terminal device; or
information indicating that the first terminal device is a relay terminal device or an end terminal device.

53. The method according to any one of claims 50 to 52, wherein
the first assistance information is directly transmitted by the first terminal device to the first device; or
the first assistance information is transmitted by the first terminal device to the first device through a second terminal device,
wherein the second terminal device is connected with the first terminal device via a single-hop link.

54. The method according to any one of claims 29 to 53, wherein
the first identifier is directly transmitted by the first device to the first terminal device; or
the first identifier is transmitted by the first device to the first terminal device through a second terminal device,
wherein the second terminal device is connected with the first terminal device via a single-hop link.

55. The method according to any one of claims 29 to 54, wherein
the first identifier is configured after the first device receives assistance information transmitted by terminal devices on the first link, wherein the first device is an external device of the first link; or
the first identifier is configured after the first device receives assistance information transmitted by terminal devices except the first device on the first link, wherein the first device is a terminal device on the first link; or
the first identifier is configured after the first device receives assistance information transmitted by at least one terminal device on the first link; or
the first identifier is configured after a time following transmission of request information reaches a first duration, wherein the request information is used to request assistance information; or
the first identifier is configured after a time following establishment of a connection of the first link reaches a second duration; or
configuration of the first identifier is not related to whether assistance information is received,
wherein the assistance information is used to determine an identifier associated with the first link.

56. A terminal device, wherein the terminal device is a first terminal device, and the terminal device comprises:
a receiving module, configured to receive a first identifier configured by a first device, wherein the first identifier is used to transmit data on a first link,
wherein the first link is a sidelink, and the first link passes through a plurality of relay terminal devices.

57. The terminal device according to claim 56, wherein the first identifier is used to identify one of following:
the first link;
one single-hop link on the first link;
a plurality of single-hop links on the first link; or
one terminal device on the first link.

58. The terminal device according to claim 57, wherein the first identifier comprises a terminal device identity of one end terminal device on the first link, and the first link is determined based on terminal device identities of two end terminal devices on the first link.

59. The terminal device according to any one of claims 56 to 58, wherein the first device comprises one of following:
an end terminal device on the first link;
a target relay terminal device on the first link; or
an external device of the first link.

60. The terminal device according to claim 59, wherein the target relay terminal device is determined based on one or more of following:
a quantity of relay hops between a relay terminal device and an end terminal device on the first link;
first indication information transmitted by an upper layer;
a terminal device capability of a relay terminal device on the first link;
whether a relay terminal device on the first link is located within coverage of a network device; or
a position of a relay terminal device on the first link.

61. The terminal device according to claim 59 or 60, wherein the target relay terminal device comprises one or more of following:
a relay terminal device with a minimum quantity of relay hops away from an end terminal device on the first link;
a terminal device indicated by first indication information transmitted by an upper layer;
a relay terminal device located within coverage of a network device on the first link; or
a relay terminal device located in a center of the first link.

62. The terminal device according to any one of claims 59 to 61, wherein the external device comprises one of following:
a serving terminal device of a terminal device on the first link; or
a network device.

63. The terminal device according to any one of claims 56 to 58, wherein the first identifier is used to identify a first single-hop link on the first link, the first single-hop link is associated with the first terminal device and a second terminal device, and the first device is the second terminal device; or
the first identifier comprises a terminal device identity of one terminal device on the first link, and the first link is determined based on terminal device identities of terminal devices on the first link.

64. The terminal device according to claim 63, wherein the first link comprises N single-hop links, each single-hop link in the N single-hop links corresponds to one identifier, the identifier corresponding to each single-hop link is configured by one terminal device associated with the single-hop link, and N is a positive integer greater than or equal to 2.

65. The terminal device according to claim 63, wherein the first link comprises M relay terminal devices, each relay terminal device in the M relay terminal devices is associated with two single-hop links on the first link, each relay terminal device is configured to configure identifiers for the two single-hop links associated with each relay terminal device, and M is a positive integer greater than or equal to 2.

66. The terminal device according to claim 65, wherein the first single-hop link is located between a first relay terminal device and a second relay terminal device on the first link, the first relay terminal device configures a second identifier for the first single-hop link, the second relay terminal device configures a third identifier for the first single-hop link, the second identifier is associated with a first transmission direction of the first single-hop link, and the third identifier is associated with a second transmission direction of the first single-hop link.

67. The terminal device according to claim 65, wherein the first single-hop link is located between a first relay terminal device and a second relay terminal device on the first link, the first relay terminal device configures a second identifier for the first single-hop link, and the second relay terminal device configures a third identifier for the first single-hop link;
for the first relay terminal device, data transmission is performed on the first single-hop link based on the second identifier and a mapping relationship between the second identifier and the third identifier; and
for the second relay terminal device, data transmission is performed on the first single-hop link based on the third identifier and the mapping relationship between the second identifier and the third identifier.

68. The terminal device according to claim 65, wherein the first single-hop link is located between a first relay terminal device and a second relay terminal device on the first link, and data transmission is performed on the first single-hop link based on an identifier configured by the first relay terminal device.

69. The terminal device according to claim 68, wherein
a time at which the first relay terminal device transmits an identifier of the first single-hop link is earlier than a time at which the second relay terminal device transmits an identifier of the first single-hop link; or
a time at which the first relay terminal device transmits assistance information is earlier than a time at which the second relay terminal device transmits assistance information, wherein the assistance information is used to determine an identifier corresponding to the first single-hop link; or
a terminal device capability of the first relay terminal device is higher than a terminal device capability of the second relay terminal device; or
the first relay terminal device negotiates with the second relay terminal device to determine that the first relay terminal device configures an identifier of the first single-hop link; or
a connection establishment request used to establish the first single-hop link is initiated by the first relay terminal device.

70. The terminal device according to claim 65, wherein the first single-hop link is located between a first relay terminal device and a second relay terminal device on the first link, the first relay terminal device configures a second identifier for the first single-hop link, the second relay terminal device configures a third identifier for the first single-hop link, and data transmission is performed on the first single-hop link based on a target identifier in the second identifier and the third identifier.

71. The terminal device according to claim 70, wherein
the target identifier is the identifier with a smaller value in the second identifier and the third identifier; or
the target identifier is the identifier with a larger value in the second identifier and the third identifier.

72. The terminal device according to any one of claims 56 to 58, wherein the first identifier is used to identify two single-hop links associated with a first relay terminal device on the first link, and the first device is the first relay terminal device; or
the first identifier comprises a terminal device identity of one terminal device on the first link, and the first link is determined based on terminal device identities of terminal devices on the first link.

73. The terminal device according to any one of claims 56 to 72, wherein the first identifier is carried by a first message, and the first message is a PC5-RRC message or a PC5-S message.

74. The terminal device according to claim 73, wherein the first message is a PC5-RRC message, the first message comprises configuration information of an SRAP layer, and the configuration information comprises the first identifier.

75. The terminal device according to any one of claims 56 to 74, wherein the terminal device further comprises:
a first communications module, configured to transmit or receive signalling on the first link based on a fourth identifier,
wherein the fourth identifier comprises one of following:
a default identifier;
an identifier determined based on protocol pre-defined information; or
an identifier determined based on a first mapping relationship.

76. The terminal device according to claim 75, wherein the first mapping relationship comprises one or more of following:
a mapping relationship between a service and the fourth identifier;
a mapping relationship between a service identifier and the fourth identifier;
a mapping relationship between a relay service code and the fourth identifier; or
a mapping relationship between a layer 2 identity of a terminal device and the fourth identifier.

77. The terminal device according to any one of claims 56 to 76, wherein the terminal device further comprises:
a transmitting module, configured to transmit first assistance information to the first device, wherein the first assistance information is used to determine the first identifier.

78. The terminal device according to claim 77, wherein the transmission of the first assistance information is triggered based on a first condition, and the first condition comprises one or more of following:
the first terminal device receives information for requesting assistance information;
the first terminal device receives a data packet that comprises a new identifier or an unknown identifier;
the first terminal device establishes a new sidelink based on a relay terminal device;
configured identities of the first terminal device conflict with each other; or
the first terminal device receives second assistance information transmitted by another terminal device, wherein the second assistance information is used to determine an identifier associated with the first link.

79. The terminal device according to claim 77 or 78, wherein the first assistance information comprises one or more of following:
a configured identity of the first terminal device;
a position of the first terminal device on the first link;
a layer 2 identity of the first terminal device;
a layer 2 identity of a previous-hop terminal device of the first terminal device;
a layer 2 identity of a next-hop terminal device of the first terminal device; or
information indicating that the first terminal device is a relay terminal device or an end terminal device.

80. The terminal device according to any one of claims 77 to 79, wherein
the first assistance information is directly transmitted by the first terminal device to the first device; or
the first assistance information is transmitted by the first terminal device to the first device through a second terminal device,
wherein the second terminal device is connected with the first terminal device via a single-hop link.

81. The terminal device according to any one of claims 56 to 80, wherein
the first identifier is directly transmitted by the first device to the first terminal device; or
the first identifier is transmitted by the first device to the first terminal device through a second terminal device,
wherein the second terminal device is connected with the first terminal device via a single-hop link.

82. The terminal device according to any one of claims 56 to 81, wherein the terminal device further comprises:
a second communications module, configured to transmit or receive a first data packet, wherein the first data packet is a data packet of an SRAP layer, and the first data packet comprises the first identifier.

83. The terminal device according to claim 82, wherein the first terminal device is associated with a second single-hop link and a third single-hop link, the first identifier is used to identify the second single-hop link, and the first data packet is a data packet transmitted by using the second single-hop link; and
the terminal device further comprises:
a forwarding module, configured to: after the first terminal device replaces the first identifier with a fifth identifier, forward the first data packet by using the third single-hop link, wherein the fifth identifier is used to identify the third single-hop link.

84. A communications device, wherein the communications device is a first device, and the communications device comprises:
a transmitting module, configured to transmit a first identifier configured by the first device to a first terminal device, wherein the first identifier is used to transmit data on a first link, the first link is a sidelink, and the first link passes through a plurality of relay terminal devices.

85. The communications device according to claim 84, wherein the first identifier is used to identify one of following:
the first link;
one single-hop link on the first link;
a plurality of single-hop links on the first link; or
one terminal device on the first link.

86. The communications device according to claim 85, wherein the first identifier comprises a terminal device identity of one end terminal device on the first link, and the first link is determined based on terminal device identities of two end terminal devices on the first link.

87. The communications device according to any one of claims 84 to 86, wherein the first device comprises one of following:
an end terminal device on the first link;
a target relay terminal device on the first link; or
an external device of the first link.

88. The communications device according to claim 87, wherein the target relay terminal device is determined based on one or more of following:
a quantity of relay hops between a relay terminal device and an end terminal device on the first link;
first indication information transmitted by an upper layer;
a terminal device capability of a relay terminal device on the first link;
whether a relay terminal device on the first link is located within coverage of a network device; or
a position of a relay terminal device on the first link.

89. The communications device according to claim 87 or 88, wherein the target relay terminal device comprises one or more of following:
a relay terminal device with a minimum quantity of relay hops away from an end terminal device on the first link;
a terminal device indicated by first indication information transmitted by an upper layer;
a relay terminal device located within coverage of a network device on the first link; or
a relay terminal device located in a center of the first link.

90. The communications device according to any one of claims 87 to 89, wherein the external device comprises one of following:
a serving terminal device of a terminal device on the first link; or
a network device.

91. The communications device according to any one of claims 84 to 86, wherein the first identifier is used to identify a first single-hop link on the first link, the first single-hop link is associated with the first terminal device and a second terminal device, and the first device is the second terminal device; or
the first identifier comprises a terminal device identity of one terminal device on the first link, and the first link is determined based on terminal device identities of terminal devices on the first link.

92. The communications device according to claim 91, wherein the first link comprises N single-hop links, each single-hop link in the N single-hop links corresponds to one identifier, the identifier corresponding to each single-hop link is configured by one terminal device associated with the single-hop link, and N is a positive integer greater than or equal to 2.

93. The communications device according to claim 91, wherein the first link comprises M relay terminal devices, each relay terminal device in the M relay terminal devices is associated with two single-hop links on the first link, each relay terminal device is configured to configure identifiers for the two single-hop links associated with the relay terminal device, and M is a positive integer greater than or equal to 2.

94. The communications device according to claim 93, wherein the first single-hop link is located between a first relay terminal device and a second relay terminal device on the first link, the first relay terminal device configures a second identifier for the first single-hop link, the second relay terminal device configures a third identifier for the first single-hop link, the second identifier is associated with a first transmission direction of the first single-hop link, and the third identifier is associated with a second transmission direction of the first single-hop link.

95. The communications device according to claim 93, wherein the first single-hop link is located between a first relay terminal device and a second relay terminal device on the first link, the first relay terminal device configures a second identifier for the first single-hop link, and the second relay terminal device configures a third identifier for the first single-hop link;
for the first relay terminal device, data transmission is performed on the first single-hop link based on the second identifier and a mapping relationship between the second identifier and the third identifier; and
for the second relay terminal device, data transmission is performed on the first single-hop link based on the third identifier and the mapping relationship between the second identifier and the third identifier.

96. The communications device according to claim 93, wherein the first single-hop link is located between a first relay terminal device and a second relay terminal device on the first link, and data transmission is performed on the first single-hop link based on an identifier configured by the first relay terminal device.

97. The communications device according to claim 96, wherein
a time at which the first relay terminal device transmits an identifier of the first single-hop link is earlier than a time at which the second relay terminal device transmits an identifier of the first single-hop link; or
a time at which the first relay terminal device transmits assistance information is earlier than a time at which the second relay terminal device transmits assistance information, wherein the assistance information is used to determine an identifier corresponding to the first single-hop link; or
a terminal device capability of the first relay terminal device is higher than a terminal device capability of the second relay terminal device; or
the first relay terminal device negotiates with the second relay terminal device to determine that the first relay terminal device configures an identifier of the first single-hop link; or
a connection establishment request used to establish the first single-hop link is initiated by the first relay terminal device.

98. The communications device according to claim 93, wherein the first single-hop link is located between a first relay terminal device and a second relay terminal device on the first link, the first relay terminal device configures a second identifier for the first single-hop link, the second relay terminal device configures a third identifier for the first single-hop link, and data transmission is performed on the first single-hop link based on a target identifier in the second identifier and the third identifier.

99. The communications device according to claim 98, wherein
the target identifier is the identifier with a smaller value in the second identifier and the third identifier; or
the target identifier is the identifier with a larger value in the second identifier and the third identifier.

100. The communications device according to any one of claims 84 to 86, wherein the first identifier is used to identify two single-hop links associated with a first relay terminal device on the first link, and the first device is the first relay terminal device; or
the first identifier comprises a terminal device identity of one terminal device on the first link, and the first link is determined based on terminal device identities of terminal devices on the first link.

101. The communications device according to any one of claims 84 to 100, wherein the first identifier is carried by a first message, and the first message is a PC5-RRC message or a PC5-S message.

102. The communications device according to claim 101, wherein the first message is a PC5-RRC message, the first message comprises configuration information of an SRAP layer, and the configuration information comprises the first identifier.

103. The communications device according to any one of claims 84 to 102, wherein before the transmitting, by the first device, the first identifier configured by the first device to the first terminal device, signalling is transmitted or received on the first link based on a fourth identifier, wherein the fourth identifier comprises one of following:
a default identifier;
an identifier determined based on protocol pre-defined information; or
an identifier determined based on a first mapping relationship.

104. The communications device according to claim 103, wherein the first mapping relationship comprises one or more of following:
a mapping relationship between a service and the fourth identifier;
a mapping relationship between a service identifier and the fourth identifier;
a mapping relationship between a relay service code and the fourth identifier; or
a mapping relationship between a layer 2 identity of a terminal device and the fourth identifier.

105. The communications device according to any one of claims 84 to 104, wherein the communications device further comprises:
a receiving module, configured to receive first assistance information transmitted by the first terminal device, wherein the first assistance information is used to determine the first identifier.

106. The communications device according to claim 105, wherein the transmission of the first assistance information is triggered based on a first condition, and the first condition comprises one or more of following:
the first terminal device receives information for requesting assistance information;
the first terminal device receives a data packet that comprises a new identifier or an unknown identifier;
the first terminal device establishes a new sidelink based on a relay terminal device;
configured identities of the first terminal device conflict with each other; or
the first terminal device receives second assistance information transmitted by another terminal device, wherein the second assistance information is used to determine an identifier associated with the first link.

107. The communications device according to claim 105 or 106, wherein the first assistance information comprises one or more of following:
a configured identity of the first terminal device;
a position of the first terminal device on the first link;
a layer 2 identity of the first terminal device;
a layer 2 identity of a previous-hop terminal device of the first terminal device;
a layer 2 identity of a next-hop terminal device of the first terminal device; or
information indicating that the first terminal device is a relay terminal device or an end terminal device.

108. The communications device according to any one of claims 105 to 107, wherein
the first assistance information is directly transmitted by the first terminal device to the first device; or
the first assistance information is transmitted by the first terminal device to the first device through a second terminal device,
wherein the second terminal device is connected with the first terminal device via a single-hop link.

109. The communications device according to any one of claims 84 to 108, wherein
the first identifier is directly transmitted by the first device to the first terminal device; or
the first identifier is transmitted by the first device to the first terminal device through a second terminal device,
wherein the second terminal device is connected with the first terminal device via a single-hop link.

110. The communications device according to any one of claims 84 to 109, wherein
the first identifier is configured after the first device receives assistance information transmitted by terminal devices on the first link, wherein the first device is an external device of the first link; or
the first identifier is configured after the first device receives assistance information transmitted by terminal devices except the first device on the first link, wherein the first device is a terminal device on the first link; or
the first identifier is configured after the first device receives assistance information transmitted by at least one terminal device on the first link; or
the first identifier is configured after a time following transmission of request information reaches a first duration, wherein the request information is used to request assistance information; or
the first identifier is configured after a time following establishment of a connection of the first link reaches a second duration; or
configuration of the first identifier is not related to whether assistance information is received,
wherein the assistance information is used to determine an identifier associated with the first link.

111. A terminal device, comprising a transceiver, a memory, and a processor, wherein the memory is configured to store a program, and the processor is configured to invoke the program in the memory, to cause the terminal device to execute the method according to any one of claims 1 to 28.

112. A communications device, comprising a transceiver, a memory, and a processor, wherein the memory is configured to store a program, and the processor is configured to invoke the program in the memory, to cause the communications device to execute the method according to any one of claims 29 to 55.

113. An apparatus, comprising a processor, configured to invoke a program from a memory, to cause the apparatus to execute the method according to any one of claims 1 to 55.

114. A chip, comprising a processor, configured to invoke a program from a memory, to cause a device on which the chip is installed to execute the method according to any one of claims 1 to 55.

115. A computer-readable storage medium, wherein the computer-readable storage medium stores a program, and the program causes a computer to execute the method according to any one of claims 1 to 55.

116. A computer program product, comprising a program, wherein the program causes a computer to execute the method according to any one of claims 1 to 55.

117. A computer program, wherein the computer program causes a computer to execute the method according to any one of claims 1 to 55.
